(19) **Europäisches Patentamt European Patent Office Office européen des brevets**

(11) **EP 4 650 750 A1**

(12) **EUROPEAN PATENT APPLICATION**
published in accordance with Art. 153(4) EPC

(43) Date of publication:
**19.11.2025 Bulletin 2025/47**

(21) Application number: **23916248.0**

(22) Date of filing: **21.12.2023**

(51) International Patent Classification (IPC):
***G01N 15/14*** (2024.01)    ***G01N 21/64*** (2006.01)

(52) Cooperative Patent Classification (CPC):
**G01N 15/14; G01N 21/64**

(86) International application number:
**PCT/JP2023/045864**

(87) International publication number:
**WO 2024/150634 (18.07.2024 Gazette 2024/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.01.2023 JP 2023001636**

(71) Applicant: **Sony Group Corporation
Tokyo 108-0075 (JP)**

(72) Inventor: **TAHARA Katsutoshi
Tokyo 108-0075 (JP)**

(74) Representative: **D Young & Co LLP
3 Noble Street
London EC2V 7BQ (GB)**

(54) **BIOLOGICAL SAMPLE ANALYSIS DEVICE, BIOLOGICAL SAMPLE ANALYSIS SYSTEM, AND METHOD FOR VERIFYING STATUS OF BIOLOGICAL SAMPLE ANALYSIS DEVICE**

(57)    An object of the present disclosure is to provide a technique for detecting a change or anomaly in an analyzer or beads, particularly for detecting a change or anomaly in a fluorescence signal output.

According to the present disclosure, there is provided a biological sample analyzer including an information processing unit that executes information processing by using signal intensity data of light generated by light irradiation to a flow channel where particles flow. The information processing unit executes a verification process for verifying a state of the analyzer by using at least one or more first index values and one or more second index values, the first index value indicating an overall output level change in a plurality of fluorescence channels, the second index value indicating an output level change in each of the plurality of fluorescence channels. In addition, according to the present disclosure, there is provided a biological sample analysis system including the information processing unit. Moreover, according to the present disclosure, there is provided a method for verifying a state of a biological sample analyzer, the method including the verification process.

## FIG.1

## FIG.2

EP 4 650 750 A1

**Description**

[Technical Field]

The present disclosure relates to a biological sample analyzer, a biological sample analysis system, and a method for verifying the state of the biological sample analyzer. More specifically, the present disclosure relates to a biological sample analyzer and a biological sample analysis system for executing analysis on the basis of light generated by irradiating particles flowing in a flow channel with light, and to a method for verifying the state of the biological sample analyzer.

[Background Art]

For example, characteristics of particles have been measured by labeling a group of particles, such as cells, microorganisms, and liposomes, with a fluorescent dye, irradiating each of the particles of the particle group with laser light, and measuring the intensity and/or pattern of fluorescence emitted from the fluorescent dye excited by the laser light irradiation. An example of a biological sample analyzer for carrying out this measurement may be a flow cytometer. In addition, an example of a biological sample analyzer designed to sort cells may be a cell sorter.

The flow cytometer and the cell sorter may be designed to irradiate particles flowing in one row in a flow channel with laser light (excitation light) having a specific wavelength and detect fluorescence and/or scattered light emitted from each of the particles, to analyze a plurality of the particles one by one. These devices convert light detected by a photodetector into an electrical signal for quantification, and statistically analyze the electrical signal to determine characteristics of individual particles, such as a type, a size, and a structure.

As for such a biological sample analyzer, for example, PTL 1 described below discloses a microparticle measuring device including a detection unit that detects light from a microparticle and an information processing unit that uses a sensitivity correction coefficient to correct a value detected by the detection unit and generates spectral data. The sensitivity correction coefficient is identified on the basis of a value of light detected by the detection unit from a fluorescence standard particle that emits fluorescence having a predetermined wavelength bandwidth. In PTL 1, it is also described that the sensitivity correction coefficient is applicable to determination of a possibility of use of a deteriorated fluorescence standard particle and a possibility of deterioration of a channel.

[Citation List]

[Patent Literature]

[PTL 1]
JP 2017-026556 A

[Summary]

[Technical Problems]

Such a biological sample analyzer as the flow cytometer and a cell separation system calibrates or standardizes the state of the analyzer by using a fluorescence level obtained by irradiating fluorescence beads with light, in some cases. As such fluorescence beads, Automatic Setup Beads (also called ASB) and Align Check Beads are available, for example.

In the operation of such calibration or standardization, a fluorescence output obtained from beads for each specific wavelength is used as a standard. However, with deterioration of the beads, the fluorescence level of the beads considerably changes from the level of the beads that have yet to deteriorate. Accordingly, an anomaly in a signal output caused by such beads needs to be detected.

Further, incorrect data may possibly be applied by human errors. If the calibration or the standardization is executed with the incorrect data thus applied, the analyzer may incorrectly be set up. In addition, an output of only one of a plurality of fluorescence channels may be lowered due to an optical or electrical problem, for example. An anomaly in the analyzer needs to be detected also for these cases.

Moreover, there are some analyzers in which a chip or a flow cell having a flow channel where particles in a sample are irradiated with light is replaced. Concerning such analyzers, along with the replacement of the chip or the flow cell, an overall change may occur in a signal output. Detection of such a change is also important.

In order to verify the state of the analyzer more appropriately, more specifically calibrate or standardize the state of the analyzer, detection of such an anomaly or change in the analyzer and/or detection of an output anomaly in a fluorescence signal caused by beads are considered to be useful.

An object of the present disclosure is to provide a technique for detecting a change or anomaly in the analyzer or the beads as described above, particularly for detecting a change or anomaly in a fluorescence signal output.

[Solution to Problems]

According to the present disclosure, there is provided a biological sample analyzer including an information processing unit that executes information processing by using signal intensity data of light generated by light irradiation to a flow channel where particles flow. The information processing unit executes a verification process for verifying a state of the analyzer by using at least one or more first index values and one or more second index values, the first index value indicating an overall output level change in a plurality of fluorescence channels, the second index value indicating an output level change in each of the plurality of fluorescence channels.

The first index value may be calculated on the basis of a first output value of a representative fluorescence channel indicating an overall output level of the plurality of fluorescence channels.

The first index value may be calculated by using at least a previous first output value and a current first output value, the previous first output value being acquired in an executed verification process that has been executed before execution of the verification process, the current first output value being acquired in the verification process (hereinafter referred to as a "current verification process").

The first index value may be calculated by using a ratio or difference between the previous first output value and the current first output value.

The first index value may be calculated by further using a predetermined standard output value of the representative fluorescence channel in addition to the previous first output value and the current first output value.

A previous first standard output value acquired in the executed verification process and a first standard output value acquired in the current verification process may be used as the predetermined standard output value.

The second index value may be calculated on the basis of the first index value and a second output value of each of other fluorescence channels excluding the representative fluorescence channel.

The second index value may be calculated by using at least the first index value, a previous second output value, and a current second output value, the previous second output value being acquired in an executed verification process that has been executed before execution of the verification process, the current second output value being acquired in the verification process (hereinafter referred to as a "current verification process").

The second index value may be calculated by further using a predetermined standard output value of each of the other fluorescence channels in addition to the first index value, the previous second output value, and the current second output value.

A previous second standard output value acquired in the executed verification process and a second standard output value acquired in the current verification process may be used as the predetermined standard output value.

The biological sample analyzer can determine that the state of the analyzer is appropriate, in a case where the first index value meets a predetermined first condition and where the one or more second index values meet a predetermined second condition.

The biological sample analyzer can execute a gain adjustment process for each of the fluorescence channels after determining that the state of the analyzer is appropriate.

The biological sample analyzer can record a gain of each of the fluorescence channels, the gain being set in the gain adjustment process.

The biological sample analyzer can determine that the state of the analyzer is not appropriate, in a case where the first index value does not meet a predetermined first condition or where the one or more second index values do not meet a predetermined second condition.

The biological sample analyzer can output, after determining that the state of the analyzer is not appropriate, one or more items selected from a group including a display urging that fluorescence beads be reprepared, a display urging that a QC process be performed again, a display urging that a chip, a flow cell, or the analyzer be inspected, a display associated with a change or anomaly in fluorescence beads used in the verification process, a display associated with a change or anomaly in the biological sample analyzer, and a display associated with incorrect application of standard value data.

The biological sample analyzer can execute the verification process by using fluorescence beads as the particles.

The fluorescence beads may emit fluorescence covering an entire wavelength range of fluorescence to be detected by the plurality of fluorescence channels.

The biological sample analyzer may include a flow cytometer.

In addition, according to the present disclosure, there is also provided a biological sample analysis system including an information processing unit that executes information processing by using signal intensity data of light generated by light irradiation to a flow channel where particles flow. The information processing unit executes a verification process for verifying a state of an analyzer by using at least one or more first index values and one or more second index values, the first index value indicating an overall output level change in a plurality of fluorescence channels, the second index value indicating an output level change in each of the plurality of fluorescence channels.

Moreover, according to the present disclosure, there is also provided a method for verifying a state of a biological sample analyzer, the method including a verification process for verifying a state of an analyzer by using at least one or more first index values and one or more second index values, the first index value and the second index value being generated from signal intensity data of light generated by light irradiation to particles flowing in a flow channel. The first index value indicates an overall output level change in a plurality of fluorescence channels, and the second index value indicates an output level change in each of the plurality of fluorescence channels.

[Brief Description of Drawings]

[FIG. 1]

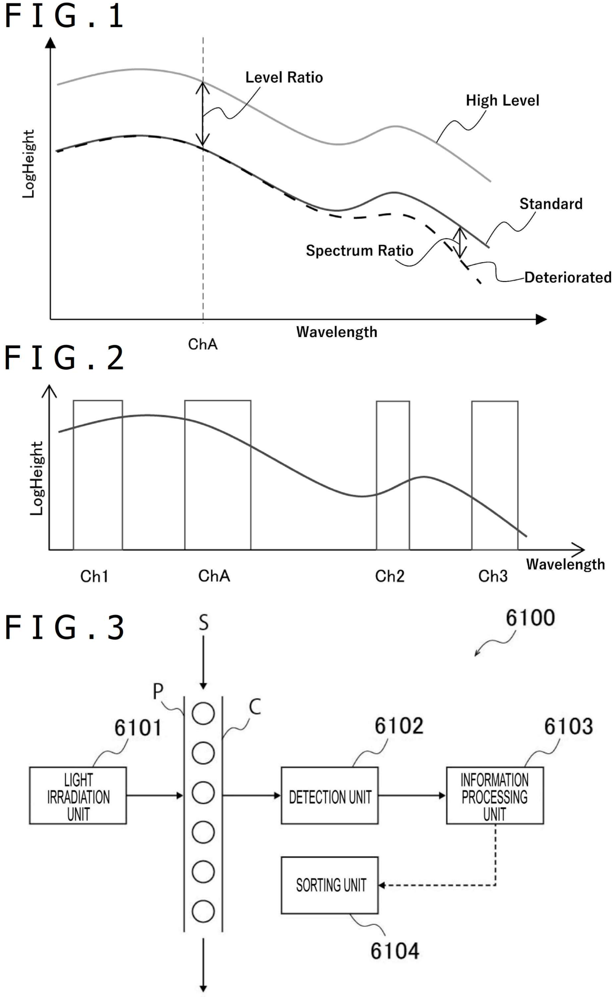

FIG. 1 is a schematic diagram for explaining a fluorescence level change measured by a biological sample analyzer.
[FIG. 2]
FIG. 2 is a schematic diagram for explaining a determination method used for verifying an overall level change and a spectrum change.
[FIG. 3]
FIG. 3 is a diagram schematically showing the overall configuration of a biological sample analyzer.
[FIG. 4]

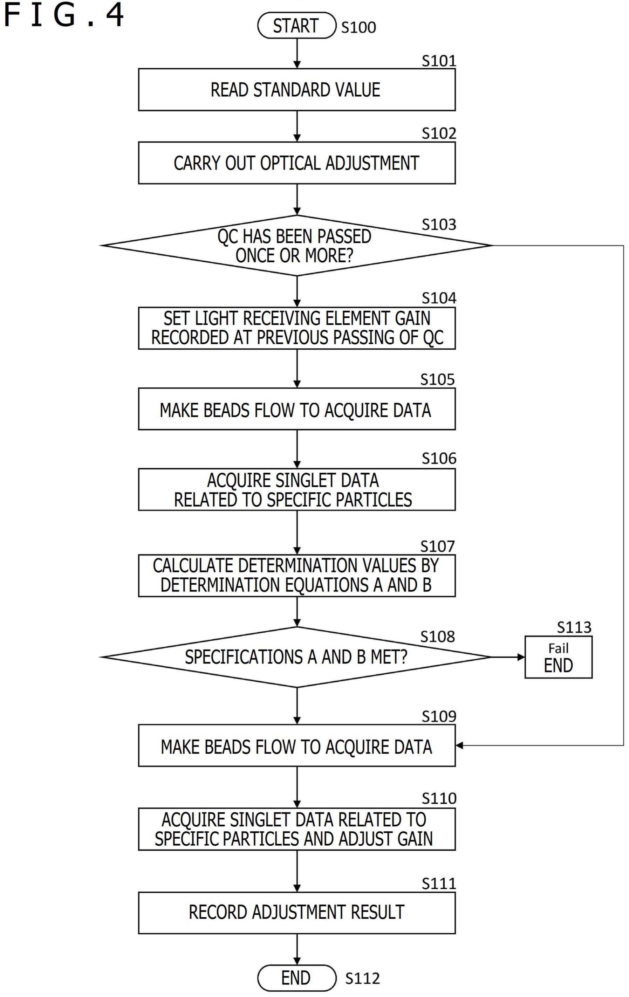

FIG. 4 is a flowchart of an example of a verification process according to the present disclosure.
[FIG. 5]

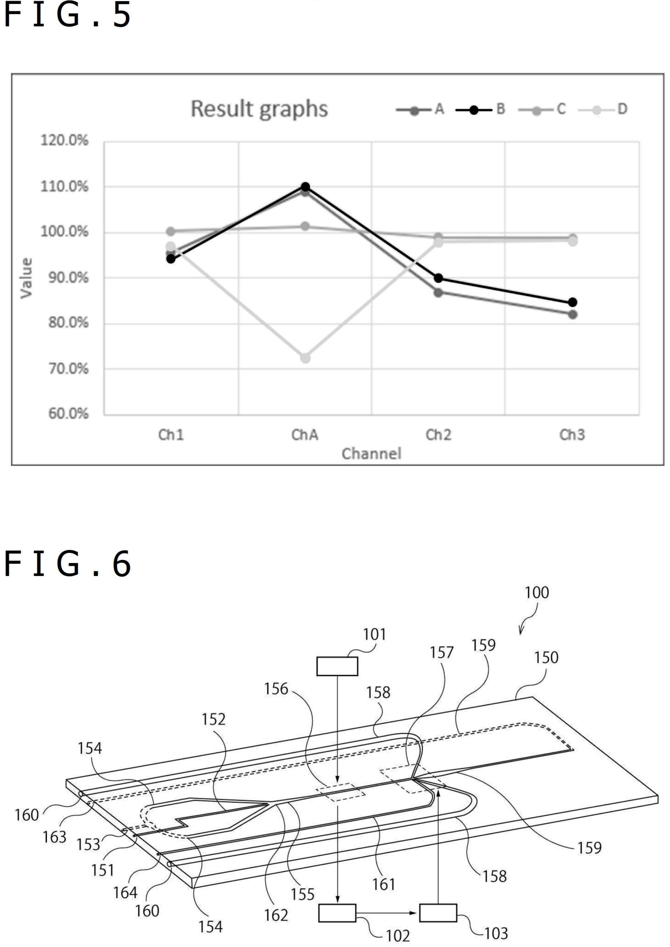

FIG. 5 is a graph indicating a result of index value calculation by determination equations A and B.
[FIG. 6]
FIG. 6 is a table illustrating a configuration example of a biological sample analyzer according to the present disclosure.
[FIG. 7]

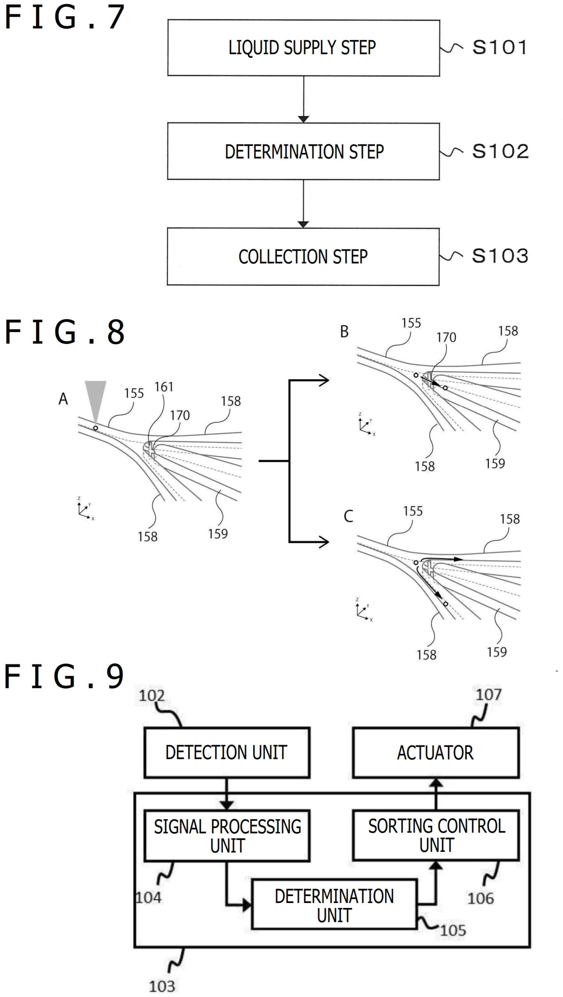

FIG. 7 is a diagram illustrating an example of a flowchart of a biological particle sorting process.
[FIG. 8]
FIG. 8 schematically illustrates enlarged views of a particle sorting portion.
[FIG. 9]
FIG. 9 is a diagram illustrating a schematic configuration example of a control unit.

[Description of Embodiments]

Preferred embodiments for carrying out the present disclosure will hereinafter be described. Note that the embodiments will be described below as typical embodiments of the present disclosure. It is therefore not intended that the scope of the present disclosure should be limited to only these embodiments. Note that the description of the present disclosure will be presented in the following order.

1. First embodiment (biological sample analyzer)

(1) Basic concept

(1-1) Overall fluorescence level change and fluorescence level change in partial wavelength range
(1-2) Detection of overall fluorescence level change and fluorescence level change in partial wavelength range

(2) Configuration example
(3) Example of verification process
(4) Example 1 (example of verification process)
(5) Example 2 (actual verification)
(6) Configuration example of biological particle sorting device

2. Second embodiment (biological sample analysis system)
3. Third embodiment (verification method for biological sample analyzer and program for executing same verification method)

1. First embodiment (biological sample analyzer)

(1) Basic concept

(1-1) Overall fluorescence level change and fluorescence level change in partial wavelength range

A change or anomaly in the analyzer or the beads described above is detectable on the basis of a change in a fluorescence level. The change in the fluorescence level will be described with reference to FIG. 1. FIG. 1 schematically illustrates an example of a fluorescence spectrum generated by light irradiation to the beads described above. In FIG. 1, the horizontal axis represents a wavelength (Wavelength), while the vertical axis represents a signal level (LogHeight). There will hereinafter be described in more detail an overall level change in fluorescence obtained from the beads and a relative spectrum change with an output on a certain wavelength used as a standard.

(Overall level change)

The overall level change is a change in an output of a fluorescence signal throughout a wavelength range of a fluorescence spectrum. For example, the overall level change can be caused, for example, in a case where there is a defect or change in transmittance of a chip (e.g., flow cell chip) having a flow channel where the beads are irradiated with light, in a case where there is an optical change in a light irradiation unit (e.g., light emitting system) which irradiates this flow channel with light, in a case where laser power changes, or in other cases. The overall level change is such a change as indicated by a "high level (High Level, gray line)" and a "standard (Standard, black line)" in FIG. 1. This change corresponds to a state where, although an output relation between the respective wavelengths has not changed, a level difference occurs in the entire spectrum. For example, the overall level change can be evaluated on the basis of a ratio (indicated as Level Ratio in FIG. 1) or a difference between signal outputs in a fluorescence channel ChA for detecting fluorescence having a predetermined wavelength.

In the present description, the fluorescence channel used for detection of the overall level change will also be referred to as "ChA." In many cases, biological sample analyzers such as flow cytometers each include a plurality of fluorescence channels. Which of the plurality of fluorescence channels is used for detection of the overall level change may be appropriately selected by those skilled in the art. For example, the fluorescence channel used for detection of the overall level change may be selected according to a type or fluorescence characteristics of beads to be used, a configuration or characteristics of the analyzer, or other factors.

Further, in the present description, the fluorescence channel ChA used for detection of the overall level change can also be referred to as a "representative fluorescence channel." The term "representative" in this name is just an indication given to distinguish it from other fluorescence channels by the names for convenience.

It is preferable that ChA be a fluorescence channel for detecting fluorescence having short wavelengths in the wavelength range of fluorescence generated from fluorescence beads. For example, this fluorescence channel is a fluorescence channel for detecting fluorescence having a wavelength shorter than or equal to 700 nm, preferably shorter than or equal to 650 nm, more preferably shorter than or equal to 600 nm. Fluorescence having short wavelengths is particularly preferable as fluorescence indicating an overall fluorescence level change caused by a difference between chips, a laser power anomaly, or the like, for example.

Note that the fluorescence channel may be of 300 nm or higher, 350 nm or higher, or 400 nm or higher, for example.

In addition, it is preferable that ChA be a fluorescence channel for detecting fluorescence in a wavelength range in which the signal intensity is high in the wavelength range of fluorescence generated from fluorescence beads. For example, ChA may be allocated to a channel for detecting fluorescence in a wavelength range in which the signal intensity is the highest in a plurality of fluorescence channels included in the analyzer, or may be allocated to a channel for detecting fluorescence in a wavelength range in which the signal intensity is the second, third, fourth, or fifth highest intensity. In this manner, the fluorescence channel for detecting fluorescence in the wavelength range in which the signal intensity level is high is used for detection of the overall level change, and thus, adverse effects of noise on a verification process can be reduced.

Moreover, one or more fluorescence channels may be used for detection of the overall level change.

In a case where one fluorescence channel is used for detection of the overall level change, this fluorescence channel may be ChA as described above.

In a case where two or more fluorescence channels are used for detection of the overall level change, different one or more fluorescence channels may further be used in addition to ChA, for example.

When a fluorescence level has changed in a partial wavelength range due to deterioration of beads or the like, for example, the fluorescence level change is remarkable in a long wavelength range but is scarcely recognizable in a short wavelength range. That is, a fluorescence channel allocated to a channel for detecting fluorescence in the short wavelength range is suitable for detection of the overall fluorescence level change. It is therefore preferable that a fluorescence channel for detecting fluorescence having shorter wavelengths than the wavelength detected by ChA be used for detection of the overall level change in addition to ChA.

That is, in a case where the biological sample analyzer has, in addition to ChA, one or more fluorescence channels for detecting fluorescence having shorter wavelengths than the wavelength detected by ChA, any one or more of the channels may be selected from among ChA and the one or more fluorescence channels for the shorter wavelengths and used for detection of the overall level change. Besides, in addition to ChA, all of the one or more fluorescence channels for the shorter wavelengths than the wavelength detected by ChA may be used for detection of the overall level change.

(Spectrum change)

For example, in a case where beads have deteriorated or where beads in a different lot are used as a standard spectrum, such a fluorescence level change as indicated by the "standard (Standard, black line)" and "spectrum deterioration (Deteriorated, broken line)" in FIG. 1 occurs. That is, fluorescence signal intensity changes in part of a wavelength range of an entire fluorescence spectrum generated from beads. This change can be evaluated on the basis of a relative ratio of each of the outputs from a plurality of fluorescence channels (particularly, fluorescence channels other than ChA) to the output of ChA described above (the ratio is indicated as Spectrum Ratio in FIG. 1).

In the present description, a fluorescence channel used for detection of a fluorescence level change in part of the wavelength range of the entire fluorescence spectrum will also be referred to as "ChX." In other words, "ChX" may represent a fluorescence channel other than ChA. ChX will be described in detail later.

The overall level change and the spectrum change described above are useful for detection of an anomaly or change in the state of beads, a biological sample analyzer, a biological sample analysis system, or a chip or a flow cell used in the analyzer or the system.

That is, according to the present disclosure, there is provided a biological sample analyzer which verifies the state of the analyzer on the basis of an overall output level change in a plurality of fluorescence channels and an output level change in each of the plurality of fluorescence channels. Further, according to the present disclosure, there is also provided a biological sample analysis system which executes this verification. In addition, according to the present disclosure, there is also provided a biological sample analysis method for verifying the state of the analyzer on the basis of an overall output level change in a plurality of fluorescence channels and an output level change in each of the plurality of fluorescence channels.

According to one embodiment, the biological sample analyzer or the biological sample analysis system may include an information processing unit that executes information processing by using signal intensity data of light generated by light irradiation to a flow channel where particles flow. This information processing unit may be designed to execute a verification process for verifying the state of the analyzer by using at least one or more first index values and one or more second index values, the first index value indicating an overall output level change in the plurality of fluorescence channels, the second index value indicating an output level change in each of the plurality of fluorescence channels.

The one or more first index values each indicating the overall output level change in the plurality of fluorescence channels may be used for the verification.

The first index value may be a value calculated on the basis of an output value of a representative fluorescence channel. Note that the output value of the representative fluorescence channel is also referred to as a "first output value" in the present description.

In addition, the second index value indicating the output level change in each of the plurality of fluorescence channels may also be used for the verification. For example, the second index value may be a value calculated for each of other fluorescence channels excluding the representative fluorescence channel in the plurality of fluorescence channels included in the biological sample analyzer. That is, the second index value may be a value calculated on the basis of each of the output values of the other fluorescence channels. Note that each of the output values of the other fluorescence channels is also referred to as a "second output value" in the present description. As will be described later, the second index value may be a value calculated on the basis of the first index value and the second output value.

(Beads)

Particles used in the verification process according to the present disclosure may be fluorescence beads, for example. These fluorescence beads may be appropriately selected by those skilled in the technical field. It is preferable, however, that these fluorescence beads be particles which emit high-level fluorescence throughout a wide wavelength range. It is particularly preferable that the fluorescence beads be such fluorescence beads which emit fluorescence in the entire wavelength range of fluorescence detected by the plurality of fluorescence channels. As such fluorescence beads, Automatic Setup Beads and Align Check Beads (both manufactured by Sony Group Corporation) described above are available, for example. Also, as such fluorescence beads, fluorescence beads containing a plurality of types of particle groups having fluorescence intensity levels which gradually change, such as 8 peak beads and 6 peak beads, may be used, for example.

The fluorescence beads may be beads having a substantially uniform particle diameter. This particle diameter may be appropriately selected by those skilled in the art according to a flow channel size or the like, for example. This particle diameter may be 100 μm or smaller, 50 μm or smaller, or 30 μm or smaller, for example. Further, this particle diameter may be 0.1 μm or larger, 0.3 μm or larger, or 0.5 μm or larger, for example. These fluorescence beads may contain one type or two or more types of beads.

(1-2) Detection of overall fluorescence level change and fluorescence level change in partial wavelength range

An example of a determination method used for detecting an overall level change and a spectrum change will hereinafter be described with reference to FIG. 2. FIG. 2 schematically illustrates an example of a fluorescence spectrum generated by light irradiation to the beads described above. In FIG. 2, the horizontal axis represents a wavelength (Wavelength), while the vertical axis represents a signal level (LogHeight). In this description, a biological sample analyzer including four fluorescence channels Ch1, ChA, Ch2, and Ch3 is assumed to be used. FIG. 2 also illustrates wavelength ranges of fluorescence detected by the respective fluorescence channels (the wavelength ranges are indicated by rectangles of gray lines).

(Detection of overall level change)

For example, as for a biological sample analyzer which allows replacement of a chip or a flow cell having a flow channel where particles are irradiated with light, in a case where the chip or the flow cell is replaced, a fluorescence signal level may change due to a difference in transmittance of the chip or the flow cell. In order to verify this change, an output value of the fluorescence channel ChA, which is illustrated in FIG. 2, that is yet to be changed and an output value thereof that has been changed (i.e., an output value of the fluorescence channel ChA associated with fluorescence generated by light irradiation to the particles flowing in the flow channel of the chip or the flow cell that is yet to be replaced, and an output value of the fluorescence channel ChA associated with fluorescence generated by light irradiation to the particles flowing in the chip or the flow cell that has been replaced) are used. In particular, a ratio or difference between these output values is used.

Here, not only laser power of laser light entering the chip or the flow cell and the difference in the transmittance of the chip or the flow cell but also a fluorescence level ratio for each of the beads are factors in a change in the ratio or difference between the output values of ChA changes. Accordingly, a determination equation for determining presence of absence of the overall level change may be established by using a standard value (adjustment target value, GoldStandard (also referred to as GS)) of beads to be used for each of the fluorescence channels, as well as the ratio or difference between the output values of ChA. The following determination equation A is an example of this determination equation.

```
<Determination equation A>

(ChA ratio)

= {(ChAnew_Height) / (ChAold_Height)} / {(ChAnew_GS) /

(ChAold_GS)}

= (ChAnew_Height) × (ChAold_GS) / {(ChAold_Height) ×

(ChAnew_GS)}
```

Constituent elements of the determination equation A mean as follows.

ChAold: an expression indicating a previous parameter of ChA
ChAnew: an expression indicating a parameter of ChA currently acquired
Height: a Median value of Height

GS: GoldStandard = a standard value (= adjustment target value) of used beads in a corresponding channel (ChA)

(ChAnew_Height): a Median value of Height of ChA currently acquired

(ChAold_Height): a previous Median value of Height of ChA

(ChAnew_GS): GoldStandard of ChA currently acquired

(ChAold _GS): previous GoldStandard of ChA

The standard value (GoldStandard) may be identified beforehand by a manufacturer of the beads, for example, and may be identified for each lot of the beads, for example. In order to obtain this standard value, a biological sample analyzer used as a standard may be prepared to measure the standard value by the biological sample analyzer used as the standard, for example.

For example, the level ratio caused by a difference between lots of the beads is cancelled by using the above-mentioned determination equation A, particularly the (ChA ratio) obtained by the determination equation A. Accordingly, a change in laser power (e.g., anomaly in laser power), a change in characteristics of the chip or the flow cell (e.g., defect (particularly, flaw, dirt, or the like) affecting the transmittance of the chip or the flow cell), or a change in the beads can be verified, for example. In other words, presence or absence of the overall level change in the fluorescence spectrum can be verified truly (without being affected by the level ratio caused by the difference between the lots of the beads).

In this manner, the first index value such as the (ChA ratio) may be used in the verification process according to the present disclosure as described above. The first index value is useful for detection of the overall level change.

As described above, the first index value may be calculated by using the first output value such as (ChAnew_Height) and (ChAold_Height), for example. That is, the first index value may be a value calculated by using at least a previous first output value acquired in an executed verification process that has been executed before execution of the verification process (hereinafter also referred to as a "current verification process"), and a current first output value acquired in the verification process. The first index value calculated by using these first output values is useful for detection of the overall level change.

As described above, the first index value may be calculated by using the ratio such as {(ChAnew_Height) / (ChAold_Height) }, for example. Alternatively, the first index value may also be calculated by using a difference such as {(ChAnew_Height) - (ChAold_Height)}, for example, instead of the ratio.

That is, the first index value may be a value calculated by using a ratio or difference between the previous first output value and the current first output value. This ratio or difference is useful for obtaining a first index value appropriate for detection of the overall level change.

As described above, the first index value may be calculated by using a predetermined standard output value such as (ChAnew_GS) and (ChAold _GS) in addition to the first output value, for example. That is, the first index value may be a value calculated by further using a predetermined standard output value of the representative fluorescence channel in addition to the previous first output value and the current first output value. Also, a previous first standard output value (e.g., (ChAold_GS)) acquired in the executed verification process and a first standard output value (e.g., (ChAnew_GS)) acquired in the current verification process may be used as the predetermined standard output value. For example, a fluorescence level ratio caused by the difference between the lots of the fluorescence beads can be cancelled by using the predetermined standard output value. Accordingly, the fluorescence level change can be detected more appropriately.

For example, the predetermined standard output value may be used as the ratio such as {(ChAnew_GS) / (ChAold GS)} as described above. Alternatively, for example, a difference such as {(ChAnew_GS) - (ChAold_GS)} may be used instead of the ratio. That is, the first index value may be calculated by using a ratio or difference between the previous first standard output value and the first standard output value acquired in the current verification process.

Further, as described above, the first index value based on an output value of the one fluorescence channel may be used for detection of the overall level change. Further, one first index value based on output values of a plurality of the fluorescence channels or a plurality of first index values based on the respective output values of the plurality of fluorescence channels may also be used for this detection.

In a case where the output values of the plurality of fluorescence channels are used for detection of the overall level change, it is preferable that the plurality of fluorescence channels be fluorescence channels allocated for detection of fluorescence in a wavelength range that has a less effect of beads deterioration. It is preferable that the plurality of fluorescence channels include at least ChA described above and further include one or more fluorescence channels which detect fluorescence having shorter wavelengths than the wavelength detected by ChA.

According to the one embodiment, the one first index value based on the output values of the plurality of fluorescence channels may be used for detection of the overall level change. For example, an average value of the output values of the plurality of fluorescence channels may be used. More specific examples of the first index value in this embodiment include an average value of an output value of ChA and an output value of Ch1. An index value based on a ratio or difference between the average values may be used as the first index value. The first index value based on the ratio or difference between the average values may be a (ChA1 ratio) calculated by the following determination equation A1, for example. Further, while the ratio is used in the following determination equation A1, a difference may be used as mentioned in conjunction with the determination equation A above, instead of the ratio. The first index value calculated in this manner may be used for determination using specifications described later.

```
<Determination equation A1>

(ChA1 ratio)

= {(ChA1new_Height) / (ChA1old_Height)} / {( ChA1new_GS)

/ (ChA1old_GS)}

= (ChA1new_Height) × (ChA1old_GS) / {(ChA1old_Height) ×

(ChA1hAnew_GS)}
```

Constituent elements of the determination equation A1 mean as follows.

(ChA1new_Height): an average value of a Median value of Height of ChA and a Median value of Height of Ch1 currently acquired
(ChA1old_Height): an average value of a previous Median value of Height of ChA and a previous Median value of Height of Ch1
(ChA1new_GS): an average value of GoldStandard of ChA and GoldStandard of Ch1 currently acquired
(ChA1old_GS): an average value of previous GoldStandard of ChA and previous GoldStandard of Ch1

In another embodiment, the plurality of first index values based on the respective output values of the plurality of fluorescence channels may also be used for detection of the overall level change. For example, the plurality of first index values in the embodiment includes a first index value calculated on the basis of an output value of ChA (hereinafter, the first index value will be referred to as a "ChA first index value"), and a first index value calculated on the basis of an output value of Ch1 (hereinafter, the first index value will be referred to as a "Ch1 first index value"). The (ChA ratio) calculated by the determination equation A described above is an example of the ChA first index value. Further, the example of the Ch1 first index value may be calculated by an equation similar to the determination equation A. For example, the Ch1 first index value may be a (Ch1 ratio) calculated by the following determination equation 1.

```
<Determination equation 1>

(Ch1 ratio)

= {(Ch1new_Height) / (Ch1old_Height)} / {(Ch1new_GS) /

(Ch1old_GS)}

= (Ch1new_Height) × (Ch1old_GS) / {(Ch1old_Height) ×

(Ch1new_GS)}
```

Constituent elements of the determination equation 1 mean as follows.

(Ch1new_Height): a Median value of Height of Ch1 currently acquired
(Ch1old_Height): a previous Median value of Height of Ch1
(Ch1new_GS): GoldStandard of Ch1 currently acquired
(Ch1old_GS): previous GoldStandard of Ch1

The larger of the two first index values calculated in this manner (ChA first index value and Ch1 first index value) may be used for determination using specifications described later.
Alternatively, the smaller of the two first index values may be used for determination using specifications described below.

(Detection of spectrum change)

A ratio of an output of the fluorescence channel ChA to an output of another fluorescence channel ChX (ChX corresponds to one of Ch1, Ch2, and Ch3 in the case of FIG. 2) is defined as a spectrum ratio.

In the present description, "ChX" may refer to a fluorescence channel other than ChA. For example, in a case where the biological sample analyzer includes the four fluorescence channels as illustrated in FIG. 2, one of the four fluorescence channels which is used for verification of the overall level change is represented as ChA, while each of the other three fluorescence channels is represented as ChX where X is 1, 2, or 3. In other words, the four fluorescence channels are represented as ChA, Ch1, Ch2, and Ch3. In this manner, in a case where the number of fluorescence channels included in the analyzer is N (N is any positive integer), the number of the fluorescence channels ChX included in the analyzer is (N-1). In other words, the fluorescence channels ChX in the analyzer can be expressed as Ch1, Ch2, ..., and Ch(N-1).

The number N of the fluorescence channels may be appropriately changed according to the type of the analyzer. For example, the number N of the fluorescence channels is two or more, particularly three or more, and more particularly four or more. Further, the upper limit of the number N of the fluorescence channels may not be particularly set, but may be 100 or smaller, 90 or smaller, or 80 or smaller. For example, the biological sample analyzer or system may include 4 to 64 fluorescence channels, particularly 4 to 32 fluorescence channels.

In a case where beads have deteriorated, for example, the spectrum can change from a state where the beads have yet to deteriorate. Further, a level ratio for each of the beads also affects the spectrum. Accordingly, the determination equation for verifying the spectrum change may be established by using a standard value (adjustment target value, GoldStandard (also referred to as GS) in ChX in addition to a ratio or difference between the output values of ChX. In addition, this determination equation may include a ChA output ratio as a constituent element from a viewpoint that level changes in the other fluorescence channels are relative to each other. The following determination equation B is an example of this determination equation.

The spectrum change verification using the determination equation B may be executed for each of the fluorescence channels ChX.

```
<Determination equation B>

(ChX output ratio)

= [{(ChXnew_Height) / (ChAnew_Height)} / {(ChXold_Height)

/ (ChAold_Height)}] / [{(ChXnew_GS) / (ChAnew_GS)} /

{(ChXold_GS) / (ChAold_GS)}]

= {(ChXnew_Height) × (ChXold_GS)} / {(ChXold_Height) ×

(ChA ratio) × (ChXnew_GS)}
```

Constituent elements of the determination equation B mean as follows.

ChXold: an expression indicating a previous parameter of ChX
ChXnew: an expression indicating a parameter of ChX currently acquired
ChAold: an expression indicating a previous parameter of ChA
ChAnew: an expression indicating a parameter of ChA currently acquired
Height: a Median value of Height
GS: a Standard value (= adjustment target value) of used beads in a corresponding channel
(ChXnew_Height): a Median value of Height of ChX currently acquired
(ChAnew_Height): a Median value of Height of ChA currently acquired
(ChXold_Height): a previous Median value of Height of ChX
(ChAold_Height): a previous Median value of Height of ChA
(ChXnew_GS): GoldStandard of ChX currently acquired

(ChAnew_GS): GoldStandard of ChA currently acquired
(ChXold_GS): previous GoldStandard of ChX
(ChAold_GS): previous GoldStandard of ChA
(ChA ratio): obtained by determination A described above

The standard value (GoldStandard) may be identified beforehand by a manufacturer of the beads, for example, and may be identified for each lot of the beads, for example. In order to obtain this standard value, a biological sample analyzer used as a standard may be prepared to measure the standard value by the biological sample analyzer used as the standard, for example.

The spectrum ratio change caused by the difference between the lots of the beads is cancelled by using the above-mentioned determination equation B, particularly the (ChX output ratio) obtained by the determination equation B. Accordingly, only the spectrum change can be verified, and therefore, presence or absence of deterioration of the beads, presence or absence of output deterioration of a certain fluorescence channel included in the analyzer, and the like can be determined, for example. In other words, presence or absence of a fluorescence spectrum change can be verified truly (without being affected by the spectrum ratio change caused by the difference between the lots of the beads).

In this manner, the second index value such as the (ChX output ratio) may be used in the verification process according to the present disclosure as described above. The second index value is useful for detection of a level change in each of the other fluorescence channels.

As described above, the second index value may be calculated by using the second output values of the other fluorescence channels such as (ChXnew_Height) and (ChXold_Height) in addition to the (ChA ratio), for example. That is, the second index value may be a value calculated by using at least the first index value, a previous second output value acquired in the executed verification process that has been executed before execution of the verification process (hereinafter referred to as the "current verification process"), and a current second output value acquired in the current verification process. The second index value thus calculated is useful for detection of a relative level change in each of the fluorescence channels.

As described above, the second index value may be calculated by using a predetermined standard output value such as (ChXold_GS) and (ChXnew_GS) in addition to the first index value, the current second output value, and the previous second output value. That is, the second index value may be a value calculated by further using each of predetermined standard output values of the other fluorescence channels in addition to the first index value, the previous second output value, and the current second output value. A previous second standard output value (e.g., (ChXold_GS)) acquired in the executed verification process and a second standard output value (e.g., (ChXnew_GS)) acquired in the current verification process may be used as the predetermined standard output value. For example, a fluorescence level ratio caused by the difference between the lots of the fluorescence beads can be cancelled by using such a predetermined standard output value described above. Accordingly, the fluorescence level change can be detected more appropriately.

(Determination method using determination equation A)

The determination equation A described above, particularly the (ChA ratio) obtained by the determination equation A described above may be incorporated into the following condition (specification A), for example. According to the present disclosure, presence or absence of the overall level change may be determined on the basis of whether or not this condition has been met.

```
<Specification A>

(1 - α) < (ChA ratio) < (1 + α)
```

In the specification A described above, a predetermined value $\alpha$ may be appropriately set by those skilled in the art on the basis of a measurement variation peculiar to the individual analyzer, a variation (in the transmittance) of the chip or the flow cell, and/or a variation of the analyzer itself. For example, a standard deviation may be calculated from a plurality of pieces of output value data obtained by measurement carried out a plurality of times, and $\alpha$ may be set on the basis of this standard deviation. In addition, $\alpha$ may also be set on the basis of a change in the beads or an anomaly in the transmittance of the chip or the flow cell.

For example, $\alpha$ can be set as described in the following Specific example 1.
(measurement variation or variation in transmittance of chip or flow cell) < $\alpha$ < (value indicating that change in beads is determined as anomaly or value indicating that transmittance of chip or flow cell is determined as anomaly) ... Specific example 1

For example, the predetermined value $\alpha$ used for the determination equation A may be a value ranging from 0.01 to 0.3, particularly from 0.05 to 0.25.

Further, the (ChA1 ratio) described above may be used in the specification A instead of the (ChA ratio).

Alternatively, a large value or a small value in a plurality of the first index values (e.g., the larger or the smaller of the following two values: the ChA first index value and the Ch1 first index value) may be used in the specification A instead of the (ChA ratio).

(Determination method using determination equation B)

The determination equation B described above, particularly the (ChX output ratio) obtained by the determination equation B described above may be incorporated into the following condition (specification B), for example. According to the present disclosure, presence or absence of the overall level change may be determined on the basis of whether or not this condition has been met.

<Specification B>

$$(1 - \beta) < (\text{ChX output ratio}) < (1 + \beta)$$

In the specification B described above, a predetermined value $\beta$ may be appropriately set by those skilled in the art on the basis of a measurement variation peculiar to the individual analyzer, a variation (in the transmittance) of the chip or the flow cell, and/or a variation of the analyzer itself. For example, a standard deviation may be calculated from a plurality of pieces of output value data obtained by measurement carried out a plurality of times, and $\beta$ may be set on the basis of this standard deviation. In addition, $\beta$ may also be set on the basis of a change in the beads.

For example, $\beta$ can be set so as to meet the following Specific example 2.

(measurement variation or variation in transmittance of chip or flow cell) < $\beta$ < (value indicating that change in beads is determined as anomaly)      Specific example 2

For example, $\beta$ may be a value ranging from 0.01 to 0.3, particularly from 0.05 to 0.25.

It is preferable that the respective elements of the above-mentioned specifications hold true without contradiction in the large-small relation. In a case where it is difficult to achieve the above, however, part of the specification may be eased or ignored.

For example, the specification A may be eased or changed within the range of Specific example 1 where the setting of $\alpha$ is described. In addition, either the upper limit or the lower limit defined in the specification A may be eliminated. That is, such a condition as $(1 - \alpha) < (\text{ChA ratio})$ or $(\text{ChA ratio}) < (1 + \alpha)$ may be used.

Further, the specification B may be eased or changed within the range of Specific example 2 where the setting of $\beta$ is described. In addition, either the upper limit or the lower limit defined in the specification B may also be eliminated. That is, such a condition as $(1 - \beta) < (\text{ChX output ratio})$ or $(\text{ChX output ratio}) < (1 + \beta)$ may be used.

In particular, a variation of $\alpha$ in the determination equation A is an absolute variation and tends to have a large value. The determination equation A is suited for determination of an excessive change or deterioration of the beads or detection of a large change in the transmittance of the chip or the flow cell.

Further, a variation of $\beta$ in the determination equation B is a relative variation and tends to have a small value. Accordingly, the determination equation B is considered to have a higher ability for recognizing an anomaly in the beads.

In the one embodiment, in a case where the biological sample analyzer includes a plurality of the channels ChX, the same specification B may be set for the respective channels ChX.

In another embodiment, in a case where the biological sample analyzer includes a plurality of the channels ChX, the specification B may be set for each of the channels ChX, that is, the different specifications B may be set for the respective channels ChX. In other words, the value of $\beta$ used in the specification B may be different between the channels ChX.

The biological sample analyzer may determine that the state of the analyzer is appropriate, in a case where the (ChA ratio) calculated according to the determination equation A described above and the (ChX output ratio) calculated according to the determination equation B described above meet the specification A and the specification B, respectively. The state where the specification A is met indicates that an overall level change is absent or falls within an allowable range, and the state where the specification B is met indicates that a relative level change in each of the fluorescence channels (particularly, each of the other fluorescence channels except the representative fluorescence channel) is absent or falls within an allowable range.

In this manner, the biological sample analyzer according to the present disclosure may determine that the state of the analyzer is appropriate, in a case where the first index value meets a predetermined first condition (e.g., specification A) and where the one or more second index values meet a predetermined second condition (e.g., specification B).

Further, the biological sample analyzer may execute a gain adjustment process for each of the fluorescence channels after determining that the state of the analyzer is appropriate. This gain adjustment process may be executed such that the output value of each of the fluorescence channels falls within a numerical value range set beforehand for each of the fluorescence channels. By adjusting a gain of each of the fluorescence channels after it is confirmed that the state is appropriate, the gain can be appropriately set.

In addition, the biological sample analyzer may be designed to record the gains of the respective fluorescence channels set in the gain adjustment process. The gains may be recorded in the biological sample analyzer (particularly, a storage unit included in the biological sample analyzer) or in a server to which the biological sample analyzer is connected. The gains recorded in this manner can be used in the next verification process.

The biological sample analyzer can determine that the state of the analyzer is not appropriate, in a case where the first index value does not meet the predetermined first condition or where the one or more second index values do not meet the predetermined second condition. This configuration can prevent the biological sample analyzer in an inappropriate state from executing biological sample analysis.

The biological sample analyzer may be designed to output, after determining that the state is not appropriate, a display urging that the fluorescence beads be reprepared, a display urging that a QC process be performed again, or a display urging that the chip, the flow cell, or the analyzer be inspected.

Further, the biological sample analyzer may be designed to output, after determining that the state is not appropriate, a display associated with a change or anomaly in the fluorescence beads used in the verification process, a display associated with a change or anomaly in the biological sample analyzer, or a display associated with incorrect application of standard value data.

The above-mentioned display can urge a user to check or adjust the state of the analyzer.

(2) Configuration example

FIG. 3 shows an example configuration of a biological sample analyzer of the present disclosure. A biological sample analyzer 6100 shown in FIG. 3 includes: a light irradiation unit 6101 that irradiates a biological sample S flowing in a flow channel C with light; a detection unit 6102 that detects light generated by irradiating the biological sample S with light; and an information processing unit 6103 that processes information about the light detected by the detection unit. The biological sample analyzer 6100 is a flow cytometer or an imaging cytometer, for example. The biological sample analyzer 6100 may include a sorting unit 6104 that sorts out specific biological particles P in a biological sample. The biological sample analyzer 6100 including the sorting unit is a cell sorter, for example.

(Biological Sample)

The biological sample S may be a liquid sample containing biological particles. The biological particles are cells or non-cellular biological particles, for example. The cells may be living cells, and more specific examples thereof include blood cells such as erythrocytes and leukocytes, and germ cells such as sperms and fertilized eggs. Also, the cells may be those directly collected from a sample such as whole blood, or may be cultured cells obtained after culturing. The non-cellular biological particles are extracellular vesicles, or particularly, exosomes and microvesicles, for example. The biological particles may be labeled with one or more labeling substances (such as a dye (particularly, a fluorescent dye) and a fluorochrome-labeled antibody). Note that particles other than biological particles may be analyzed by the biological sample analyzer of the present disclosure, and beads or the like may be analyzed for calibration or the like.

(Flow Channel)

The flow channel C is designed so that a flow of the biological sample S is formed. In particular, the flow channel C may be designed so that a flow in which the biological particles contained in the biological sample are aligned substantially in one row is formed. The flow channel structure including the flow channel C may be designed so that a laminar flow is formed. In particular, the flow channel structure is designed so that a laminar flow in which the flow of the biological sample (a sample flow) is surrounded by the flow of a sheath liquid is formed. The design of the flow channel structure may be appropriately selected by a person skilled in the art, or a known one may be adopted. The flow channel C may be formed in a flow channel structure such as a microchip (a chip having a flow channel on the order of micrometers) or a flow cell. The width of the flow channel C is 1 mm or smaller, or particularly, may be not smaller than 10 $\mu$m and not greater than 1 mm. The flow channel C and the flow channel structure including the flow channel C may be made of a material such as plastic or glass.

The biological sample analyzer of the present disclosure is designed so that the biological sample flowing in the flow channel C, or particularly, the biological particles in the biological sample are irradiated with light from the light irradiation unit 6101. The biological sample analyzer of the present disclosure may be designed so that the irradiation point of light on the biological sample is located in the flow channel structure in which the flow channel C is formed, or may be designed so that the irradiation point is located outside the flow channel structure. An example of the former case may be a configuration in which the light is emitted onto the flow channel C in a microchip or a flow cell. In the latter case, the biological particles after exiting the flow channel structure (particularly, the nozzle portion thereof) may be irradiated with the light, and a flow cytometer of a jet-in-air type can be adopted, for example.

(Light Irradiation Unit)

The light irradiation unit 6101 includes a light source unit that emits light, and a light guide optical system that guides the light to the irradiation point. The light source unit includes one or more light sources. The type of the light source(s) is a laser light source or an LED, for example. The wavelength of light to be emitted from each light source may be any wavelength of ultraviolet light, visible light, and infrared light. The light guide optical system includes optical components such as beam splitters, mirrors, or optical fibers, for example. The light guide optical system may also include a lens group for condensing light, and includes an objective lens, for example. There may be one or more irradiation points at which the biological sample and light intersect. The light irradiation unit 6101 may be designed to collect light emitted onto one irradiation point from one light source or different light sources.

(Detection Unit)

The detection unit 6102 includes at least one photodetector that detects light generated by emitting light onto biological particles. The light to be detected may be fluorescence or scattered light (such as one or more of the following: forward scattered light, backscattered light, and side scattered light), for example. Each photodetector includes one or more light receiving elements, and has a light receiving element array, for example. Each photodetector may include one or more photomultiplier tubes (PMTs) and/or photodiodes such as APDs and MPPCs, as the light receiving elements. The photodetector includes a PMT array in which a plurality of PMTs is arranged in a one-dimensional direction, for example. The detection unit 6102 may also include an image sensor such as a CCD or a CMOS. With the image sensor, the detection unit 6102 can acquire an image (such as a bright-field image, a dark-field image, or a fluorescent image, for example) of biological particles.

The detection unit 6102 includes a detection optical system that causes light of a predetermined detection wavelength to reach the corresponding photodetector. The detection optical system includes a spectroscopic unit such as a prism or a diffraction grating, or a wavelength separation unit such as a dichroic mirror or an optical filter. The detection optical system is designed to disperse the light generated by light irradiation to biological particles, for example, and detect the dispersed light with a larger number of photodetectors than the number of fluorescent dyes with which the biological particles are labeled. A flow cytometer including such a detection optical system is called a spectral flow cytometer. Further, the detection optical system is designed to separate the light corresponding to the fluorescence wavelength band of a specific fluorescent dye from the light generated by the light irradiation to the biological particles, for example, and cause the corresponding photodetector to detect the separated light.

The detection unit 6102 may also include a signal processing unit that converts an electrical signal obtained by a photodetector into a digital signal. The signal processing unit may include an A/D converter as a device that performs the conversion. The digital signal obtained by the conversion performed by the signal processing unit can be transmitted to the information processing unit 6103. The digital signal can be handled as data related to light (hereinafter, also referred to as "light data") by the information processing unit 6103. The light data may be light data including fluorescence data, for example. More specifically, the light data may be data of light intensity, and the light intensity may be light intensity data of light including fluorescence (the light intensity data may include feature quantities such as area, height, and width).

(Information Processing Unit)

The information processing unit 6103 includes a processing unit that performs processing of various kinds of data (light data, for example), and a storage unit that stores various kinds of data, for example. In a case where the processing unit acquires the light data corresponding to a fluorescent dye from the detection unit 6102, the processing unit can perform fluorescence leakage correction (a compensation process) on the light intensity data. In the case of a spectral flow cytometer, the processing unit also performs a fluorescence separation process on the light data, and acquires the light intensity data corresponding to the fluorescent dye. The fluorescence separation process may be performed by an unmixing method disclosed in JP 2011-232259 A, for example. In a case where the detection unit 6102 includes an image sensor, the processing unit may acquire morphological information about the biological particles, on the basis of an image acquired by the image sensor. The storage unit may be designed to be capable of storing the acquired light data. The storage unit may be designed to be capable of further storing spectral reference data to be used in the unmixing process.

In a case where the biological sample analyzer 6100 includes the sorting unit 6104 described later, the information processing unit 6103 can determine whether to sort the biological particles, on the basis of the light data and/or the morphological information. The information processing unit 6103 then controls the sorting unit 6104 on the basis of the result of the determination, and the biological particles can be sorted by the sorting unit 6104.

The information processing unit 6103 may be designed to be capable of outputting various kinds of data (such as light data and images, for example). For example, the information processing unit 6103 can output various kinds of data (such as a two-dimensional plot or a spectrum plot, for example) generated on the basis of the light data. The information processing unit 6103 may also be designed to be capable of accepting inputs of various kinds of data, and accepts a gating process on a plot by a user, for example. The information processing unit 6103 may include an output unit (such as a display, for example) or an input unit (such as a keyboard, for example) for performing the output or the input.

The information processing unit 6103 may be designed as a general-purpose computer, and may be designed as an information processing device that includes a CPU, a RAM, and a ROM, for example. The information processing unit 6103 may be included in the housing in which the light irradiation unit 6101 and the detection unit 6102 are included, or may be located outside the housing. Further, the various processes or functions to be executed by the information processing unit 6103 may be realized by a server computer or a cloud connected via a network.

(Sorting Unit)

The sorting unit 6104 performs sorting of biological particles, in accordance with the result of determination performed by the information processing unit 6103. The sorting method may be a method by which droplets containing biological particles are generated by vibration, electric charges are applied to the droplets to be sorted, and the traveling direction of the droplets is controlled by an electrode. The sorting method may be a method for sorting by controlling the traveling direction of biological particles in the flow channel structure. The flow channel structure has a control mechanism based on pressure (injection or suction) or electric charge, for example. An example of the flow channel structure may be a chip (the chip disclosed in JP 2020-76736 A, for example) that has a flow channel structure in which the flow channel C branches into a recovery flow channel and a waste liquid flow channel on the downstream side, and specific biological particles are collected in the recovery flow channel.

(3) Example of verification process

With reference to FIG. 4, there will be described below an example of a process for verifying the state of the biological sample analyzer by using the determination equation A and the determination equation B. FIG. 4 is a flowchart of the process. Note that the process in this example is a process for determining a change or anomaly in output (particularly, fluorescence output), in a series of QC (Quality Control, also referred to as accuracy control or quality management) processes for the analyzer.

In step S100, the biological sample analyzer starts the verification process.

In step S101, the biological sample analyzer (particularly, information processing unit) acquires standard value data of fluorescence beads to be used. This standard value data may include at least a standard value of ChA and a standard value of ChX which are used for calculation of the (ChA ratio) and the (ChX output ratio) as described above. This standard value data may be stored beforehand in the biological sample analyzer (e.g., in a storage medium included in the analyzer), or the biological sample analyzer may acquire standard value data retained by a manufacturer of the fluorescence beads, for example, via a network. For example, this standard value data may be acquired via a network by using a code attached to a container containing the fluorescence beads (e.g., numbers or one-dimensional or two-dimensional code).

In step S102, the biological sample analyzer carries out optical adjustment. For example, this optical adjustment may be adjustment of an irradiation point of laser light to be applied from the light irradiation unit, and/or a chip or a flow cell. Further, a method for carrying out this optical adjustment may be appropriately selected by those skilled in the art according to the configuration of the biological sample analyzer.

In step S103, the biological sample analyzer (particularly, information processing unit) determines whether the analyzer has passed the QC process once or more. That is, it may be determined in this step whether the state of the analyzer has been determined to be allowable for the biological sample analysis by the QC process once or more. This determination is thus executed, and subsequent steps S104 to S107 are then executed, thereby calculating the determination values A and B by using a gain setting having passed the QC process. With this, the latest state of the analyzer is reflected in these determination values. This contributes to more appropriate execution of evaluation of the state of the analyzer.

In a case of determination that the QC process has been passed once or more, the analyzer advances the process to step S104.

In a case of determination that the QC process has not been passed once or more (i.e., a case where the analyzer has never passed the QC process before, for example, a case where the analyzer is used for the first time), the analyzer advances the process to step S109.

In step S104, the biological sample analyzer sets a light receiving element gain recorded at previous passing of the QC process (i.e., a light receiving element gain recorded at the latest passing of the QC process), for each of light receiving elements. The light receiving element gain recorded at previous passing of the QC process may be a gain recorded in step S111 described below, for example. In this manner, processing in step S105 and subsequent steps can be executed with use of the light receiving element gain reflecting the latest state of the analyzer. This contributes to more appropriate execution of evaluation of the state of the analyzer.

In step S105, the biological sample analyzer makes the fluorescence beads flow to acquire a predetermined number of pieces of event data. The number of pieces of the event data may be 10,000, for example, but is not limited to this number. The number of pieces of the event data may be 1,000 to 1,000,000, 2,000 to 500,000, 5,000 to 100,000, or the like, for example. As separately described below in the present description, the event data may be acquired by detecting fluorescence generated by light irradiation to each of measurement target particles (fluorescence beads) flowing in the flow channel.

More specifically, the light irradiation unit irradiates the particles flowing in the flow channel with light, and the detection unit detects light (particularly, fluorescence) generated by this light irradiation. Then, the information processing unit acquires a signal intensity data set (event data) of the detected light.

In step S106, the biological sample analyzer (particularly, information processing unit) acquires singlet data related to specific particles from the event data acquired in step S105. These specific particles are beads used for calculation of the determination value A and the determination value B, and may be determined beforehand. For example, the fluorescence beads for verifying the state of the analyzer may contain a plurality of types of fluorescence beads in some cases. In this case, which of the plurality of types of fluorescence beads is used for acquiring event data to be used in the verification process according to the present disclosure may be determined beforehand.

The biological sample analyzer can acquire only the singlet data related to the specific particles determined beforehand from the event data by using predetermined software. This predetermined software may be, but is not limited to, AutoGate, for example.

In step S106, the biological sample analyzer can further acquire a signal intensity representative value for each of the fluorescence channels on the basis of the acquired singlet data. For example, this signal intensity representative value may be a representative value related to Height or Area. Further, the representative value may be a median value (Median value), a mode value (Mode value), or an average value (Average value). In particular, the representative value may be a median value (Medium value). The signal intensity representative value is preferably a Median value of Height.

According to the one embodiment, the biological sample analyzer can acquire a Median value of Height for each of the fluorescence channels on the basis of the acquired singlet data. That is, a Median value of Height of ChA and a Median value of Height of each ChX can be acquired.

In step S107, the biological sample analyzer (particularly, information processing unit) calculates the (ChA ratio) and the (ChX output ratio) by using the singlet data (particularly, signal intensity representative value of each fluorescence channel) related to the specific particles acquired in step S106. The (ChA ratio) and the (ChX output ratio) thus calculated are used in a determination process in step S108.

The (ChX output ratio) can be calculated for each of the channels ChX. For example, in a case where the biological sample analyzer includes the three fluorescence channels Ch1, Ch2, and Ch3 as the fluorescence channels ChX as described above, a (Ch1 output ratio), a (Ch2 output ratio), and a (Ch3 output ratio) are calculated. In other words, in a case where the biological sample analyzer includes the (N-1) fluorescence channels Ch1, Ch2, ..., and Ch(N-1) as the fluorescence channels ChX as described above, the (Ch1 output ratio), the (Ch2 output ratio), ..., and a (Ch(N-1) output ratio) are calculated.

For example, the (ChA ratio) may be calculated by using the determination equation A described above. The following values are used as the respective constituent elements of the determination equation A.

A Median value of Height of ChA recorded at previous passing of the QC process is used as (ChAold_Height).

A standard value (GoldStandard) of ChA recorded at previous passing of the QC process is used as (ChAold_GS).

A Median value of Height of ChA acquired in step S106 is used as (ChAnew_Height).

A standard value (GoldStandard) of ChA acquired in step S101 is used as (ChAnew_GS).

For example, the (ChX output ratio) may be calculated by using the determination equation B described above. The following values are used as the respective constituent elements of the determination equation B.

A Median value of Height of ChX acquired in step S106 is used as (ChXnew_Height).

A Median value of Height of ChA acquired in step S106 is used as (ChAnew_Height).

A Median value of Height of ChX recorded at previous passing of the QC process is used as (ChXold_Height).

A Median value of Height of ChA recorded at previous passing of the QC process is used as (ChAold_Height).

A standard value (GoldStandard) of ChX acquired in step S101 is used as (ChXnew_GS).

A standard value (GoldStandard) of ChA acquired in step S101 is used as (ChAnew_GS).

In a case where the (ChA ratio) has already been calculated by using the determination equation A, the calculated (ChA ratio) may be used. In a case where the (ChA ratio) is used, some of the above-mentioned values may not be used as apparent from the determination equation B.

In step S108, the biological sample analyzer (particularly, information processing unit) determines whether the (ChA ratio) meets the specification A, and also determines whether the (ChX output ratio) meets the specification B. In a case where the analyzer has a plurality of the fluorescence channels as ChX, it determines whether the (ChX output ratio) of each of the plurality of fluorescence channels meets the specification B set for the corresponding fluorescence channel.

In a case where the (ChA ratio) and the (ChX output ratio) meet the specification A and the specification B, respectively (a case where all the channels ChX meet the specification B with the analyzer including a plurality of the channels ChX), the biological sample analyzer advances the process to step S109. In other words, in a case where all of the fluorescence channels meet the specifications set for the corresponding fluorescence channels, the biological sample analyzer advances the process to step S109.

In a case where the (ChA ratio) does not meet the specification A or where the (ChX output ratio) does not meet the specification B (a case where one or more of the plurality of channels ChX do not meet the specification B with the analyzer including a plurality of the channels ChX), the biological sample analyzer advances the process to step S113. In other words, in a case where at least one of the fluorescence channels does not meet the specification set for the corresponding channel, the biological sample analyzer advances the process to step S113.

The specifications described above may be used as the specification A and the specification B used in step S108.

In step S109, the biological sample analyzer makes the fluorescence beads flow to acquire a predetermined number of pieces of event data. The number of pieces of the event data may be 10,000, for example, but is not limited to this number. The number of pieces of the event data may be 1,000 to 1,000,000, 2,000 to 500,000, or 5,000 to 100,000, for example. As separately described below in the present description, the event data may be acquired by detecting fluorescence generated by light irradiation to each of measurement target particles (fluorescence beads) flowing in the flow channel.

It is preferable that the acquisition of the event data in step S109 be executed in a similar manner to the acquisition in step S105. For example, a supply speed of the sample containing the particles and a wavelength and intensity of the applied light in step S109 may be similar to those in step S105.

In step S110, the biological sample analyzer (particularly, information processing unit) acquires singlet data related to specific particles from the event data acquired in step S109. The specific particles may be the same as the specific particles described in step S106.

The biological sample analyzer can acquire only the singlet data related to the specific particles from the event data by using predetermined software. This predetermined software may be, but is not limited to, AutoGate, for example.

In step S110, the biological sample analyzer further acquires a Median value of Height for each of the fluorescence channels on the basis of the acquired singlet data. That is, a Median value of Height of ChA and a Median value of Height of each ChX are acquired.

Then, the biological sample analyzer adjusts in step S110 the gain of each of the fluorescence channels such that the acquired Median value of Height of each of the fluorescence channels falls within a predetermined range. This predetermined range may be set beforehand for each of the fluorescence channels.

In step S111, the biological sample analyzer records the Median value of Height of each of the fluorescence channels the gain of which has been adjusted in step S110, the standard value (GoldStandard) of each of the fluorescence channels, and the light receiving element gain of each of the fluorescence channels.

It is preferable that these items of data be recorded after the passing of the QC process such as a process for verifying the state of the analyzer on the basis of rCV (robust change coefficient) of each of the fluorescence channels. In other words, these items of data are recorded after it has been confirmed that the state of the analyzer meets a predetermined accuracy control condition.

The data thus recorded may be used for executing the next verification process according to the present disclosure, and is particularly used in steps S104 and S107.

In step S112, the biological sample analyzer ends the verification process according to the present disclosure, which means that the overall fluorescence level change is absent or falls within a predetermined allowable range and that the fluorescence level change in each of the fluorescence channels is absent or falls within a predetermined allowable range.

Accordingly, along with the end of the process, the biological sample analyzer may cause a display device, for example, to display that the overall fluorescence level change is absent or falls within a predetermined allowable range and that the fluorescence level change in each of the fluorescence channels is also absent or falls within a predetermined allowable range.

Further, along with the end of the process, the biological territory analyzer may also cause the display device to display an indication for urging the user to execute an operation for carrying out the biological sample analysis.

After the end of the process, the biological sample analyzer can execute the biological sample analysis by using the light receiving element gain recorded in step S111.

In step S113, the biological sample analyzer ends the verification process according to the present disclosure, which means that the overall fluorescence level change is beyond the allowable range, that a fluorescence level change in at least one of the fluorescence channels is beyond the allowable range, or that both of these changes are beyond the allowable range.

Accordingly, along with the end of the process, the biological sample analyzer may cause the display device, for example, to display that the overall fluorescence level change is beyond the allowable range, that a fluorescence level change in at least one of the fluorescence channels is beyond the allowable range, or that both of these changes are beyond the allowable range. In other words, after the end of the process, the biological sample analyzer can cause the display device, for example, to output the fact that the verification process has not been passed. This makes it possible to urge the user to check or replace the biological sample analyzer, the chip, or the flow cell.

The biological sample analyzer may change the details of display which are output in step S113, according to the result of the determination in step S108.

For example, in a case where the (ChA ratio) obtained by the determination equation A does not meet the specification A, it can be said that the overall fluorescence level change is present. Accordingly, in this case, the biological sample analyzer may output a display indicating that the overall fluorescence level change is present. Also, in this case, there may further be output a display indicating that there may be a change or anomaly in the chip or the flow cell, a display indicating that there may be a change or anomaly in the light irradiation unit, or a display indicating that there may be a change or more in laser power.

In addition, in a case where the (ChX output ratio) obtained by the determination equation B does not meet the specification B, it can be said that there is a fluorescence channel not meeting the specification B or that the fluorescence beads have deteriorated. Accordingly, in this case, the biological sample analyzer may output a display indicating the fluorescence channel not meeting the specification B. Further, in this case, a display indicating that the fluorescence beads have deteriorated may also be output.

(4) Example 1 (example of verification process)

A further specific example of the verification process according to the present disclosure will hereinafter be described.

Note that a cell sorter is used as the biological sample analyzer in the following example, but the verification process of the present disclosure may be executed not only by a flow cytometer having a sorting unit such as a cell sorter, but also by a flow cytometer not having the sorting unit.

Further, fluorescence beads ASB (Sony Group Corporation) are used as particles for the verification process in the following example. The fluorescence beads ASB contain two types of fluorescence particles. The particles of one of the two types are fluorescence particles having a particle diameter of 3 μm, while the particles of the other type are fluorescence particles having a particle diameter of 10 μm. While the verification process is performed by using singlet data related to the fluorescence particles having a particle diameter of 3 μm in the two types of fluorescence particles in the following example, the verification process according to the present disclosure may also be carried out by using the fluorescence particles having a particle diameter of 10 μm. In addition, the verification process according to the present disclosure may also be carried out by using other types of fluorescence beads.

The cell sorter was designed to execute the verification process described with reference to FIG. 3. Each step of this verification process is described as follows.

In step S100, the cell sorter starts the verification process according to the present disclosure.

In step S101, the cell sorter reads standard value data related to a lot containing fluorescence beads ASB. This standard value data includes standard values of all fluorescence channels included in the cell sorter.

In step S102, the cell sorter carries out optical adjustment. In the optical adjustment, a position of a chip having a flow channel where the fluorescence beads are irradiated with light, and/or an irradiation point of a light irradiation unit which executes this light irradiation are adjusted.

In step S103, the cell sorter determines whether the cell sorter has passed a QC process once or more. This QC process is a series of processes for controlling the performance of the analyzer, and includes not only the fluorescence level change verification process according to the present disclosure but also other verification processes (e.g., process for verifying the state of the analyzer on the basis of rCV).

In a case of determination that this QC process has been passed once or more, the cell sorter advances the process to step S104.

In a case of determination that this QC process has not been passed once or more, the cell sorter advances the process to step S109.

In step S104, the cell sorter sets a light receiving element gain recorded at previous passing of the QC process, for each of the fluorescence channels.

In step S105, the cell sorter makes the fluorescence beads flow in the flow channel where light irradiation is performed, to acquire 10,000 pieces of event data.

In step S106, the cell sorter acquires singlet data related to fluorescence beads of 3 $\mu$m from the 10,000 pieces of event data by using AutoGate, and then calculates a Median value of Height of each of the fluorescence channels by using this singlet data. That is, a Median value of Height of the singlet data is calculated for each of all the fluorescence channels included in the cell sorter.

In step S107, the cell sorter uses the ·BR>Ledian value of Height and standard value (GoldStandard) of each of the fluorescence channels recorded at previous passing of the QC process, the standard value (GoldStandard) of each of the fluorescence channels acquired in step S101 described above, and the Median value of Height of each of the fluorescence channels acquired in step S106 described above, to calculate a determination value (ChA ratio) and a determination value (ChX output ratio) according to the determination equation A and the determination equation B described above.

More specifically, the cell sorter includes a plurality of the fluorescence channels. One of the plurality of fluorescence channels is allocated to a fluorescence channel for calculating the (ChA ratio), and the other fluorescence channels are allocated to fluorescence channels for calculating the (ChX output ratios).

That is, for the one fluorescence channel ChA in the former case, the cell sorter uses the Median value of Height and standard value (GoldStandard) of the one fluorescence channel recorded at previous passing of the QC process, the standard value (GoldStandard) of the one fluorescence channel acquired in step S101 described above, and the Median value of Height of the one fluorescence channel acquired in step S106 described above, to calculate the (ChA ratio) according to the determination equation A described above.

Further, for each of the other fluorescence channels ChX in the latter case, the cell sorter uses the Median value of Height and standard value (GoldStandard) of each of the fluorescence channels recorded at previous passing of the QC process, the standard value (GoldStandard) of each of the fluorescence channels acquired in step S101 described above, and the Median value of Height of each of the fluorescence channels acquired in step S106 described above, to calculate the (ChX output ratio) according to the determination equation B.

In step S108, the cell sorter determines whether the determination value (ChA ratio) meets the specification A, and determines whether the determination value (ChX output ratio) meets the specification B.

Note that the determination value (ChA ratio) is one value in the present example.

In addition, the determination value (ChX output ratio) is calculated for each of the fluorescence channels in the present example. Accordingly, a Ch1 output ratio, a Ch2 output ratio, and a Ch3 output ration are calculated for the three fluorescence channels Ch1 to Ch3, respectively. Moreover, the specification B is also set for each of the fluorescence channels. Specifications used for determination of the Ch1 output ratio, the Ch2 output ratio, and the Ch3 output ratio are also referred to as a specification B1, a specification B2, and a specification B3, respectively.

In a case where the (ChA ratio) and the (ChX output ratio) meet the specification A and the specification B, respectively (i.e., the Ch1 output ratio, the Ch2 output ratio, and the Ch3 output ratio meet the specification B1, the specification B2, and the specification B3, respectively), in step S108, the cell sorter advances the process to step S109.

In a case where the (ChA ratio) does not meet the specification A or where the (ChX output ratio) does not meet the specification B (i.e., a case where one or more of the Ch1 output ratio, the Ch2 output ratio, and the Ch3 output ratio do not meet the set specifications) in step S108, the cell sorter advances the process to step S113.

In step S109, the cell sorter makes the fluorescence beads flow to acquire 10,000 pieces of event data. This acquisition of the event data is executed in a similar manner to the acquisition in step S105.

In step S110, the cell sorter acquires singlet data related to the fluorescence beads having a particle diameter of 3 $\mu$m from the event data acquired in step S109, similarly to step S106.

In step S110, the cell sorter further acquires a Median value of Height for each of the fluorescence channels on the basis of the acquired singlet data.

Then, the cell sorter adjusts in step S110 the light receiving element gain of each of the fluorescence channels such that the acquired Median value of Height of each of the fluorescence channels falls within a predetermined range.

In step S111, in a case of passing the QC process which is a series of processes such as the process for verifying the state of the analyzer on the basis of rCV (robust change coefficient) of each of the fluorescence channels, the cell sorter records the Median value of Height of each of the fluorescence channels, the standard value (GoldStandard) of each of the fluorescence channels, and the light receiving element gain of each of the fluorescence channels after the gain adjustment in step S110.

In step S112, the cell sorter ends the verification process according to the present disclosure, which means that the overall fluorescence level change is absent or falls within a predetermined allowable range and that the fluorescence level change in each of the fluorescence channels is absent or falls within a predetermined allowable range. After the end of the process, the cell sorter can execute the biological sample analysis by using the light receiving element gain recorded in step S111.

In step S113, the cell sorter ends the verification process according to the present disclosure, which means that the overall fluorescence level change is beyond the allowable range, that a fluorescence level change in at least one of the fluorescence channels is beyond the allowable range, or that both of these changes are beyond the allowable range. Accordingly, unlike step S112, the biological sample analysis is not executed after the end of the process.

(5) Example 2 (actual verification)

Two different lots of fluorescence beads ASB (Sony Group Corporation) were prepared. One of the lots has a lot number AP05, while the other has a lot number AN183. The cell sorter was caused to execute the verification process described above in Example 1 by using these two lots of fluorescence beads.

This verification process was carried out under conditions A to E illustrated in the following Table 1.

As for the conditions A to C among these conditions, the verification process was executed as follows.

1. The verification process described above in Example 1 was executed with use of AP05 which had not deteriorated and with GoldStandard of AP05 applied. The cell sorter passed the QC.

2. The verification process described above in Example 1 was executed with use of beads for verification (AP05 which had been left for a long time at room temperature in the condition A, and AN183 which had not deteriorated in the conditions B and C) and GoldStandard as illustrated in the table.

3. The results of calculation by the determination equation A and the determination equation B in the verification process in 2 above were checked.

As for the conditions D and E among these conditions, the verification process was executed as follows. First, data of beads of 3 $\mu$m in AP05 was acquired, and the state (the state of the analyzer or beads type) was then changed as illustrated in the table. In this way, the verification process described above in Example 1 was executed.

[Table 1]

Table 1: Details of verification process

| Condition | Condition details | Applied GS | Verification purpose |
|---|---|---|---|
| A | The verification process is executed with use of AP05 left in a room for 18 hours. Data of beads of 3 $\mu$m in AP05 is used. GS of beads of 3 $\mu$m in AP05 is used. | AP05 (3 $\mu$m) | Detect deterioration of beads left for 18 hours |
| B | The verification process is executed with use of AN183. Data of beads of 3 $\mu$m in AN183 is used. GS of beads of 3 $\mu$m in AP05 is used. | AP05 (3 $\mu$m) | Detect that the lot of the used beads is different from the lot of applied GoldStandard |
| C | The verification process is executed with use of AN183. Data of beads of 3 $\mu$m in AN183 is used. GS of beads of 3 $\mu$m in AN183 is used. | AN183 (3 $\mu$m) | Check whether the cell sorter passes the verification process, by using, in a case where a lot different from the lot used in the previous QC is being used, GS appropriate for the lot being used |
| D | The verification process is executed with use of AP05. Data of beads of 3 $\mu$m in AP05 is used. GS of beads of 3 $\mu$m in AP05 is used. However, laser power is reduced by 30% from that in the previous QC. | AP05 (3 $\mu$m) | Detect an overall decrease in the fluorescence level |

(continued)

| Condition | Condition details | Applied GS | Verification purpose |
|---|---|---|---|
| E | The verification process is executed with use of AP05.<br>Data of beads of 10 μm in AP05 is used.<br>GS of beads of 3 μm in AP05 is used. | AP05 (3 μm) | Detect application of GS of different beads in size from beads contained in the same lot |

Determination values calculated by the determination equations A and B have variations based on individual differences of the fluorescence beads or the chip (Flow Cell Chip) having the flow channel where the fluorescence beads flow, for example. These variations are identified beforehand and are 15% and 13% for the determination equation A and the determination equation B, respectively. Accordingly, $\alpha$ and $\beta$ of the specifications A and B are set such that $\alpha$ = 20% = 0.20 and $\beta$ = 15% = 0.15, in consideration of these variations.

That is, the specification A used in step S108 is as follows.

$$0.80\ (=\ 1\ -\ 0.20)\ <\ (ChA\ ratio)\ <\ 1.20\ (=\ 1\ +\ 0.20)$$

Further, the specification B used in step S108 is as follows.

$$0.85\ (=\ 1\ -\ 0.15)\ <\ (ChX\ output\ ratio)\ <\ 1.15\ (=\ 1\ +\ 0.15)$$

The following Table 2 and FIG. 5 illustrate the results of calculation by the determination equations A and B.

[Table 2]

Table 2: Results

| Channel | Dye | Applied determination equation | A | B | C | D | E |
|---|---|---|---|---|---|---|---|
| Ch1 | FITC | Determination equation B | 95.6% | 94.2% | 100.4% | 97.0% | 124.0% |
| ChA | PE | Determination equation A | 109.1% | 110.3% | 101.4% | 72.5% | 888.2% |
| Ch2 | PerCP | Determination equation B | 86.9% | 90.0% | 99.0% | 97.9% | 172.5% |
| Ch3 | PE-Cy7 | Determination equation B | 82.1% | 84.6% | 98.9% | 98.2% | 164.8% |

The results of the verification process will be described below in more detail.
Condition A. A fluorescence spectrum of AP05 which had been left in a room for 18 hours changed. More specifically, the signal intensity lowered in part of the wavelength range. This spectrum change was detectable on the basis of the (ChX output ratio) of the determination equation B associated with the fluorescence channels Ch2 and Ch3. Note that this spectrum change is undetectable on the basis of the (ChA ratio) of the determination equation A.
Condition B. GS of AP05 and AN183 had different fluorescence spectra, and the signal intensity changed in part of the wavelength range. This change was detectable on the basis of the (ChX output ratio) of the determination equation B associated with the fluorescence channel Ch3. Note that this spectrum change is not detectable on the basis of the (ChA ratio) of the determination equation A.
Condition C. The verification process was performed on AN183 by using GS of AN183. A correlation between GS and the fluorescence beads in this condition was appropriate, and the beads were normally used. No anomaly was detected in this condition for either the determination equation A or the determination equation B. In other words, no anomaly was detected with the beads appropriately used.
Condition D. In the verification process under the condition D, the laser light output applied to the beads was reduced by 30% from that in the QC executed before this verification process. Accordingly, an overall decrease in the fluorescence level was caused. This decrease was detectable by the determination equation A. On the other hand, this decrease was not detected by the determination equation B.
Condition E. The verification process under the condition E used data of beads of 10 μm. However, the QC

executed before this verification process used data of beads of 3 $\mu$m. With use of different types of beads for the verification process, the fluorescence levels differed in the entire spectrum, and the fluorescence levels of the respective fluorescence channels also differed. These differences were detectable by both the determination equation A and the determination equation B.

As described above, the state of the analyzer can be appropriately evaluated under all of the five conditions by performing the verification process according to the present disclosure. That is, presence or absence of the fluorescence level change can be appropriately verified by the biological sample analyzer (particularly, flow cytometer) which executes the verification process according to the present disclosure.

Further, the overall fluorescence level change can be detected by the verification process, and the fluorescence level change in each of the fluorescence channels can also be detected. In addition, it is also possible to determine whether the overall fluorescence level change has occurred, or whether the fluorescence level change has occurred in each of the fluorescence channels. This makes it possible to detect, for example, deterioration of the beads, application of incorrect data, an anomaly or change in an optical system, or an anomaly or change in a flow system (particularly, a chip or a flow cell having a flow channel where particles are irradiated with light).

(6) Configuration example of biological particle sorting device

According to the one embodiment, the biological sample analyzer of the present disclosure may be configured as a biological particle sorting device and may be configured as, for example, a cell sorting device. This biological particle sorting device may be a device which analyzes and/or sorts biological particles in a microchip without forming droplets. This biological particle sorting device may be designed to execute the verification process described above. This embodiment will hereinafter be described with reference to FIGS. 6 and 7.

FIG. 6 is a schematic diagram illustrating a configuration example of a microchip for sorting biological particles and a configuration example a biological particle analyzer including this microchip. FIG. 7 illustrates an example of a flowchart of a biological particle sorting operation performed by this biological particle analyzer.

A biological particle sorting microchip 150 illustrated in FIG. 6 includes a sample liquid flow channel 152 and sheath liquid flow channels 154 joining the sample liquid flow channel 152 at a junction portion 162. The biological particle sorting microchip 150 further includes a sample liquid inlet 151 and a sheath liquid inlet 153.

Note that some portions of the sheath liquid flow channels 154 are indicated by a dotted line in FIG. 6. The portions indicated by this dotted line are located at positions lower than the sample liquid flow channel 152 indicated by a solid line (positions shifted in an optical axis direction described below), and the flow channel indicated by the dotted line and the flow channel indicated by the solid line do not communicate with each other at a crossing position of these channels. Further, FIG. 6 illustrates the sample liquid flow channel 152 bending twice between the sample liquid inlet 151 and the junction portion 162, in order to easily distinguish between the sample liquid flow channel 152 and the sheath liquid flow channels 154. The sample liquid flow channel 152 may be designed to linearly extend between the sample liquid inlet 151 and the junction portion 162 without bending.

In the biological particle sorting operation, a sample liquid containing biological particles is introduced from the sample liquid inlet 151 into the sample liquid flow channel 152, and a sheath liquid not containing biological particles is introduced from the sheath liquid inlet 153 into the sheath liquid flow channels 154.

The biological particle sorting microchip 150 includes a junction flow channel 155 at one end of which the junction portion 162 is formed.

The sample liquid and the sheath liquid join together at the junction portion 162, and then flow in the junction flow channel 155 toward a particle sorting portion 157. In particular, the sample liquid and the sheath liquid join at the junction portion 162, and form a laminar flow where the sample liquid is surrounded by the sheath liquid, for example. It is preferable that biological particles be aligned substantially in one row in the laminar flow. The sample liquid flow channel 152 and the two sheath liquid flow channels 154 join at the junction portion 162, and the junction flow channel 155 is formed with the junction portion 162 at one end thereof. In such a flow channel structure as described above, a laminar flow which contains the biological particles flowing substantially in one row is formed. This makes it easy to distinguish between light generated by light irradiation to one biological particle and light generated by light irradiation to another biological particle during light irradiation to a detection region 156 described below.

The biological particle sorting microchip 150 further includes the particle sorting portion 157 at the other end of the junction flow channel 155. FIG. 8 illustrates enlarged views of the particle sorting portion 157. As illustrated in A of FIG. 8, the other end of the junction flow channel 155 is connected to a biological particle collecting flow channel 159 via a connection flow channel 170. As illustrated in A of FIG. 8, the junction flow channel 155, the connection flow channel 170, and the biological particle collecting flow channel 159 may be on the same axis.

In a case where a collection target particle flows into the particle sorting portion 157, a flow is formed from the junction flow channel 155 via the connection flow channel 170 into the biological particle collecting flow channel 159 as illustrated in B of FIG. 8. The collection target particle is thus collected into the biological particle collecting flow channel 159. In this manner, the collection target particle flows through the connection flow channel 170 into the biological particle collecting flow channel 159.

In a case where a biological particle other than the collection target particle flows into the particle sorting portion 157, on the other hand, the biological particle flows into one of branch flow channels 158 as illustrated in C of FIG. 8. In this case, the flow into the biological particle collecting flow channel 159 is not formed.

As illustrated in FIG. 6, the biological particle collecting flow channel 159 is formed to linearly extend from the particle sorting portion 157, make a U-turn, and then reach a plane identical to a plane formed by the sample liquid inlet 151 and the sheath liquid inlet 153. The liquid flowing in the biological particle collecting flow channel 159 is discharged from a collecting flow channel distal end 163 to the outside of the chip.

As illustrated in FIG. 6, each of the two branch flow channels 158 is also formed to linearly extend from the particle sorting portion 157, make a U-turn, and then reach a plane identical to the plane formed by the sample liquid inlet 151 and the sheath liquid inlet 153. The liquids flowing in the branch flow channels 158 are discharged from branch flow channel distal ends 166 to the outside of the chip.

In FIG. 6, some portions of the biological particle collecting flow channel 159 where the U-turn is made are illustrated in a different manner by a solid line and a dotted line, which indicates that the position of the biological particle collecting flow channel 159 is shifted in the optical axis direction between these portions. In this manner, the biological particle collecting flow channel 159 is positionally shifted in the optical axis direction and thus does not communicate with the branch flow channels 158 at the portion crossing the branch flow channels 158.

The collecting flow channel distal end 163 and the two branch flow channel distal ends 166 are each formed in the plane where the sample liquid inlet 151 and the sheath liquid inlet 153 are formed. Further, an introduction flow channel inlet 164 through which a liquid is introduced into an introduction flow channel 161 is also formed in this plane. In this manner, the biological particle sorting microchip 150 is configured such that inlets through which liquids are introduced and outlets through which liquids are discharged are all formed in one plane. This configuration facilitates attachment of the chip to a biological particle analyzer 100. For example, flow channels formed in the biological particle analyzer 100 and flow channels formed in the biological particle sorting microchip 150 are easily connected to each other, compared to a case where inlets and/or outlets are formed in two or more different planes.

As illustrated in FIGS. 6 and 8, the biological particle sorting microchip 150 includes the introduction flow channel 161 through which a liquid is introduced into the connection flow channel 170.

The interior of the connection flow channel 170 is filled with the liquid introduced from the introduction flow channel 161 into the connection flow channel 170. This configuration can prevent entrance of biological particles other than targets into the biological particle collecting flow channel 159.

The biological particle sorting microchip 150 includes the two branch flow channels 158 connected to the other end of the junction flow channel 155. As in this configuration, the junction flow channel of the biological particle sorting microchip used in the present technology may be branched into the connection flow channel and at least the one branch flow channel.

A biological particle other than the collection target particle flows to one of the two branch flow channels 158 without entering the biological particle collecting flow channel 159.

In addition, as illustrated in FIG. 6, the biological particle sorting microchip 150 constitutes part of the biological particle analyzer 100 including a light irradiation unit 101, a detection unit 102, and a control unit 103, in addition to the microchip. The light irradiation unit 101, the detection unit 102, and the control unit 103 correspond to the light irradiation unit 6101, the detection unit 6102, and the information processing unit 6103 described above in (2), respectively, and the explanations of these units are applicable to this configuration example. As illustrated in FIG. 9, the control unit 103 of the biological particle analyzer 100 may include a signal processing unit 104, a determination unit 105, and a sorting control unit 106.

As illustrated in FIG. 7, the biological particle sorting operation using the biological particle sorting microchip 150 described above includes a liquid supply step S101 for supplying a liquid containing biological particles to the junction flow channel 155, a determination step S102 for determining whether the biological particles flowing in the junction flow channel 155 are the collection target particles, and a collection step S103 for collecting the collection target particles into the biological particle collecting flow channel 159. Each of the steps will hereinafter be described.

(7-1) Liquid supply step

In the liquid supply step S101, a sample liquid containing biological particles and a sheath liquid not containing biological particles are introduced from the sample liquid inlet 151 and the sheath liquid inlet 153 into the sample liquid flow channel 152 and the sheath liquid flow channel 154, respectively.

The sample liquid and the sheath liquid join at the junction portion 162, and form a laminar flow where the sample liquid is surrounded by the sheath liquid, for example. It is preferable that biological particles be aligned substantially in one row in the laminar flow. That is, in the liquid supply step S101, a laminar flow which contains the biological particles flowing substantially in one row can be formed.

In this manner, the liquid containing the biological particles is supplied through the junction flow channel 155, particularly as a laminar flow, in the liquid supply step S101. The liquid flows in the junction flow channel 155 from the junction portion 162 toward the particle sorting portion 157.

(7-2) Determination step

In the determination step S102, it is determined whether the biological particles flowing in the junction flow channel 155 are the collection target particles. This determination can be made by the determination unit 105. The determination unit 105 can make this determination on the basis of light generated by light irradiation to the biological particles from the light irradiation unit 101.

The signal processing unit 104 included in the control unit 103 can process a waveform of a digital electrical signal obtained by the detection unit 102, to generate information (data) related to characteristics of light used for the determination by the determination unit 105. The signal processing unit 104 can acquire one, two, or three factors selected from a width of the waveform, a height of the waveform, and an area of the waveform, for example, as the information related to the characteristics of the light from the waveform of the digital electrical signal. Further, for example, the information related to the characteristics of the light may include time of detection of the light. The above-mentioned processing performed by the signal processing unit 104 can be particularly carried out in the mode where scattered light and/or fluorescence is detected. The determination unit 105 included in the control unit 103 determines whether the biological particles are the collection target particles, on the basis of light generated by light irradiation to the biological particles flowing in the flow channel.

(7-3) Collection step

In the collection step S103, the biological particles determined to be the collection target particles in the determination step S102 are collected into the biological particle collecting flow channel 159. The collection step S103 is performed by the particle sorting portion 157 included in the microchip 150. The laminar flow having passed through the junction flow channel 155 is separated into the two branch flow channels 158 at the particle sorting portion 157. While the particle sorting portion 157 illustrated in FIG. 6 has the two branch flow channels 158, the number of the branch flow channels is not limited to two. For example, the particle sorting portion 157 can have one or more (e.g., two, three, or four) branch flow channels. As illustrated in FIG. 6, the branch flow channels may be designed to branch in a Y shape in one plane, or may be designed to branch three-dimensionally. In the collection step S103, the collection target particles pass through the connection flow channel, and are collected into the biological particle collecting flow channel with a pressure change within the biological particle collecting flow channel 159. For example, the collection target particles may be collected by generating negative pressure within the biological particle collecting flow channel 159 as described above. This negative pressure can be generated by deforming a wall defining the biological particle collecting flow channel 159, with use of an actuator 107 (particularly, piezoelectric actuator) attached to the outside of the microchip 150, for example. This negative pressure can form the flow into the biological particle collecting flow channel 159. In order to generate this negative pressure, the actuator 107 can be attached to the outside of the microchip 150 so as to deform the wall of the biological particle collecting flow channel 159, for example. This deformation of the wall can change the inner space of the biological particle collecting flow channel 159, and generate negative pressure. For example, the actuator 107 can be a piezoelectric actuator. At the time of suction of the collection target particles into the biological particle collecting flow channel 159, the sample liquid constituting the laminar flow, or the sample liquid and the sheath liquid constituting the laminar flow can also flow into the biological particle collecting flow channel 159. In this manner, the collection target particles are sorted at the particle sorting portion 157, and collected into the biological particle collecting flow channel 159.

The connection flow channel 170 includes the introduction flow channel 161 to prevent entrance of biological particles other than the collection target particles into the biological particle collecting flow channel 159 from the connection flow channel 170. A liquid is introduced from the introduction flow channel 161 into the connection flow channel 170. The connection flow channel 170 is filled with the liquid thus introduced. Further, part of the liquid forms a flow from the connection flow channel 170 toward the junction flow channel 155. The flow thus formed prevents entrance of biological particles other than the collection target particles into the biological particle collecting flow channel 159. The liquid forming the flow from the connection flow channel 170 toward the junction flow channel 155 is prevented from flowing into the junction flow channel 155 by the flow of the liquid flowing through the junction flow channel 155 into the branch flow channels 158, and flows into the branch flow channels 158 similarly. Note that the remaining liquid introduced into the connection flow channel 170 flows toward the biological particle collecting flow channel 159. In this manner, the inside of the biological particle collecting flow channel 159 can be filled with this liquid.

The flow into the branch flow channels 158 can be discharged from branch flow channel distal ends 160 to the outside of the chip. Further, the collection target particles collected into the biological particle collecting flow channel 159 can be discharged from the collecting flow channel distal end 163 to the outside of the microchip. A container can be connected to the collecting flow channel distal end 163 via a flow path such as a tube. The collection target particles may be collected into this container.

2. Second embodiment (biological sample analysis system)

The present disclosure also provides a biological sample analysis system designed to execute the verification process described above in Section 1. That is, this system includes an information processing unit that executes information processing by using signal intensity data of light generated by light irradiation to a flow channel where particles flow. The information processing unit may be designed to execute a verification process for verifying the state of the analyzer by using at least a first index value indicating an overall output level change in a plurality of fluorescence channels and one or more second index values each indicating an output level change in each of the plurality of fluorescence channels.

This biological sample analysis system may include the light irradiation unit and the detection unit described above in Section 1, in addition to the information processing unit, and may further include the sorting unit. These constituent elements may be included in one device, or may be separated into a plurality of devices. For example, the biological sample analysis system may have an information processing device configured as the information processing unit. The biological sample analysis system may include an analyzer equipped with the light irradiation unit and the detection unit (and the sorting unit), in addition to the information processing device. These devices may be connected to one another in a wired or wireless manner. Further, these devices may be connected to one another via a network.

For example, the system can execute the following process as the verification process according to the present disclosure. Details of each step are similar to those described above in Section 1.

In step S101 in the flowchart of FIG. 4 described above in Section 1, the information processing device acquires standard value data.

In step S102, the biological sample analysis system (particularly, the analyzer) carries out optical adjustment.

In step S103, the biological sample analysis system (particularly, the information processing device) determines whether the analyzer has passed a QC process once or more.

In step S104, the biological sample analysis system (particularly, the information processing device) sets a light receiving element gain recorded at previous passing of the QC process, for each of light receiving elements of the analyzer.

In step S105, the biological sample analysis system (particularly, the analyzer) makes fluorescence beads flow to acquire a predetermined number of pieces of event data. The event data thus acquired is transmitted to the information processing device.

In step S106, the biological sample analysis system (particularly, the information processing device) acquires singlet data related to specific particles from the event data. In step S107, the biological sample analysis system (particularly, the information processing device) calculates the (ChA ratio) and the (ChX output ratio) by using the singlet data related to the specific particles.

In step S108, the biological sample analysis system (particularly, the information processing device) determines whether the (ChA ratio) meets the specification A, and determines whether the (ChX output ratio) meets the specification B.

In step S109, the biological sample analysis system (particularly, the analyzer) makes fluorescence beads flow to acquire a predetermined number of pieces of event data. The event data thus acquired is transmitted to the information processing device.

In step S110, the biological sample analysis system (particularly, the information processing device) acquires singlet data related to specific particles from the event data. Further, the information processing unit adjusts a gain of each of the fluorescence channels on the basis of the acquired singlet data.

In step S111, after a predetermined QC process is passed, for example, the biological sample analysis system (particularly, the information processing device) records a Median value of Height of each of the fluorescence channels the gain of which has been adjusted, a standard value of each of the fluorescence channels, and a light receiving element gain of each of the fluorescence channels.

In step S112, the biological sample analysis system (particularly, the analyzer) ends the verification process according to the present disclosure. After the end of the process, the system can execute biological sample analysis.

In step S113, the biological sample analysis system (particularly, the information processing device) ends the verification process according to the present disclosure. After the end of the process, the biological sample analysis system can cause the display device, for example, to output the fact that the verification process has not been passed.

3. Third embodiment (verification method for biological sample analyzer and program for executing same verification method)

The present disclosure also provides a method for verifying the state of a biological sample analyzer, the method including execution of the verification process described above in Section 1. That is, this verification method includes a verification process for verifying the state of the analyzer by using at least a first index value and one or more second index values each generated from signal intensity data of light generated by light irradiation to particles flowing in a flow channel. The first index value indicates an output level change in a plurality of fluorescence channels, and the second index value indicates an output level change in each of the plurality of fluorescence channels. For example, this verification process may be executed as described above in Section 1 with reference to FIG. 4. The explanation of the verification process is also applicable to the verification process herein.

In addition, the present disclosure also provides a program for causing a biological sample analyzer or a biological sample analysis system to execute the verification method. For example, this program may be stored in the biological sample analyzer or an information processing device (particularly, a storage unit), or may also be stored in an information storage medium. For example, the information storage medium may be an SD card, a micro SD card, a CD, a DVD, a flash memory, or a magnetic recording medium.

Note that the present disclosure can also take the following configurations.

(1) A biological sample analyzer including:

an information processing unit that executes information processing by using signal intensity data of light generated by light irradiation to a flow channel where particles flow, in which the information processing unit executes a verification process for verifying a state of the analyzer by using at least one or more first index values and one or more second index values, the first index value indicating an overall output level change in a plurality of fluorescence channels, the second index value indicating an output level change in each of the plurality of fluorescence channels.

(2) The biological sample analyzer according to (1) above, in which the first index value is calculated on the basis of a first output value of a representative fluorescence channel indicating an overall output level of the plurality of fluorescence channels.

(3) The biological sample analyzer according to (2) above, in which the first index value is calculated by using at least a previous first output value and a current first output value, the previous first output value being acquired in an executed verification process that has been executed before execution of the verification process, the current first output value being acquired in the verification process (hereinafter referred to as a "current verification process").

(4) The biological sample analyzer according to (3) above, in which the first index value is calculated by using a ratio or difference between the previous first output value and the current first output value.

(5) The biological sample analyzer according to (3) or (4) above, in which the first index value is calculated by further using a predetermined standard output value of the representative fluorescence channel in addition to the previous first output value and the current first output value.

(6) The biological sample analyzer according to (5) above, in which a previous first standard output value acquired in the executed verification process and a first standard output value acquired in the current verification process are used as the predetermined standard output value.

(7) The biological sample analyzer according to any one of (2) to (6) above, in which the second index value is calculated on the basis of the first index value and a second output value of each of other fluorescence channels excluding the representative fluorescence channel.

(8) The biological sample analyzer according to (7) above, in which the second index value is calculated by using at least the first index value, a previous second output value, and a current second output value, the previous second output value being acquired in an executed verification process that has been executed before execution of the verification process, the current second output value being acquired in the verification process (hereinafter referred to as a "current verification process").

(9) The biological sample analyzer according to (8) above, in which the second index value is calculated by further using a predetermined standard output value of each of the other fluorescence channels in addition to the first index value, the previous second output value, and the current second output value.

(10) The biological sample analyzer according to (9) above, in which a previous second standard output value acquired in the executed verification process and a second standard output value acquired in the current verification process are used as the predetermined standard output value.

(11) The biological sample analyzer according to any one of (1) to (10) above, in which

the biological sample analyzer determines that the state of the analyzer is appropriate, in a case where the first index value meets a predetermined first condition and where the one or more second index values meet a predetermined second condition.

(12) The biological sample analyzer according to (11) above, in which

the biological sample analyzer executes a gain adjustment process for each of the fluorescence channels after determining that the state of the analyzer is appropriate.

(13) The biological sample analyzer according to (12) above, in which

the biological sample analyzer records a gain of each of the fluorescence channels, the gain being set in the gain adjustment process.

(14) The biological sample analyzer according to any one of (1) to (13) above, in which

the biological sample analyzer determines that the state of the analyzer is not appropriate, in a case where the first index value does not meet a predetermined first condition or where the one or more second index values do not meet a predetermined second condition.

(15) The biological sample analyzer according to (14) above, in which

the biological sample analyzer outputs, after determining that the state of the analyzer is not appropriate, one or more items selected from a group including a display urging that fluorescence beads be reprepared, a display urging that a QC process be performed again, a display urging that a chip, a flow cell, or the analyzer be inspected, a display associated with a change or anomaly in fluorescence beads used in the verification process, a display associated with a change or anomaly in the biological sample analyzer, and a display associated with incorrect application of standard value data.

(16) The biological sample analyzer according to any one of (1) to (15) above, in which

the biological sample analyzer executes the verification process by using fluorescence beads as the particles.

(17) The biological sample analyzer according to (16) above, in which

the fluorescence beads emit fluorescence covering an entire wavelength range of fluorescence to be detected by the plurality of fluorescence channels.

(18) The biological sample analyzer according to any one of (1) to (17) above, in which

the biological sample analyzer includes a flow cytometer.

(19) A biological sample analysis system including:

an information processing unit that executes information processing by using signal intensity data of light generated by light irradiation to a flow channel where particles flow, in which

the information processing unit executes a verification process for verifying a state of an analyzer by using at least one or more first index values and one or more second index values, the first index value indicating an overall output level change in a plurality of fluorescence channels, the second index value indicating an output level change in each of the plurality of fluorescence channels.

(20) A method for verifying a state of a biological sample analyzer, the method including:

a verification process for verifying a state of an analyzer by using at least one or more first index values and one or more second index values, the first index value and the second index value being generated from signal intensity data of light generated by light irradiation to particles flowing in a flow channel, in which

the first index value indicates an overall output level change in a plurality of fluorescence channels, and the second index value indicates an output level change in each of the plurality of fluorescence channels.

[Reference Signs List]

6100: Biological sample analyzer
6101: Light irradiation unit
6102: Detection unit
6103: Information processing unit

**Claims**

1. A biological sample analyzer comprising:

an information processing unit that executes information processing by using signal intensity data of light generated by light irradiation to a flow channel where particles flow, wherein the information processing unit executes a verification process for verifying a state of the analyzer by using at least one or more first index values and one or more second index values, the first index value indicating an overall output level change in a plurality of fluorescence channels, the second index value indicating an output level change in each of the plurality of fluorescence channels.

2. The biological sample analyzer according to claim 1, wherein the first index value is calculated on a basis of a first output value of a representative fluorescence channel indicating an overall output level of the plurality of fluorescence channels.

3. The biological sample analyzer according to claim 2, wherein the first index value is calculated by using at least a previous first output value and a current first output value, the previous first output value being acquired in an executed verification process that has been executed before execution of the verification process, the current first output value being acquired in the verification process (hereinafter referred to as a "current verification process").

4. The biological sample analyzer according to claim 3, wherein the first index value is calculated by using a ratio or difference between the previous first output value and the current first output value.

5. The biological sample analyzer according to claim 3, wherein the first index value is calculated by further using a predetermined standard output value of the representative fluorescence channel in addition to the previous first output value and the current first output value.

6. The biological sample analyzer according to claim 5, wherein a previous first standard output value acquired in the executed verification process and a first standard output value acquired in the current verification process are used as the predetermined standard output value.

7. The biological sample analyzer according to claim 2, wherein the second index value is calculated on a basis of the first index value and a second output value of each of other fluorescence channels excluding the representative fluorescence channel.

8. The biological sample analyzer according to claim 7, wherein the second index value is calculated by using at least the first index value, a previous second output value, and a current second output value, the previous second output value being acquired in an executed verification process that has been executed before execution of the verification process, the current second output value being acquired in the verification process (hereinafter referred to as a "current verification process").

9. The biological sample analyzer according to claim 8, wherein the second index value is calculated by further using a predetermined standard output value of each of the other fluorescence channels in addition to the first index value, the previous second output value, and the current second output value.

10. The biological sample analyzer according to claim 9, wherein a previous second standard output value acquired in the executed verification process and a second standard output value acquired in the current verification process are used as the predetermined standard output value.

11. The biological sample analyzer according to claim 1, wherein the biological sample analyzer determines that the state of the analyzer is appropriate, in a case where the first index value meets a predetermined first condition and where the one or more second index values meet a predetermined second condition.

12. The biological sample analyzer according to claim 11, wherein

the biological sample analyzer executes a gain adjustment process for each of the fluorescence channels after determining that the state of the analyzer is appropriate.

13. The biological sample analyzer according to claim 12, wherein
the biological sample analyzer records a gain of each of the fluorescence channels, the gain being set in the gain adjustment process.

14. The biological sample analyzer according to claim 1, wherein
the biological sample analyzer determines that the state of the analyzer is not appropriate, in a case where the first index value does not meet a predetermined first condition or where the one or more second index values do not meet a predetermined second condition.

15. The biological sample analyzer according to claim 14, wherein
the biological sample analyzer outputs, after determining that the state of the analyzer is not appropriate, one or more items selected from a group including a display urging that fluorescence beads be reprepared, a display urging that a QC process be performed again, a display urging that a chip, a flow cell, or the analyzer be inspected, a display associated with a change or anomaly in fluorescence beads used in the verification process, a display associated with a change or anomaly in the biological sample analyzer, and a display associated with incorrect application of standard value data.

16. The biological sample analyzer according to claim 1, wherein
the biological sample analyzer executes the verification process by using fluorescence beads as the particles.

17. The biological sample analyzer according to claim 16, wherein
the fluorescence beads emit fluorescence covering an entire wavelength range of fluorescence to be detected by the plurality of fluorescence channels.

18. The biological sample analyzer according to claim 1, wherein
the biological sample analyzer includes a flow cytometer.

19. A biological sample analysis system comprising:

an information processing unit that executes information processing by using signal intensity data of light generated by light irradiation to a flow channel where particles flow, wherein
the information processing unit executes a verification process for verifying a state of an analyzer by using at least one or more first index values and one or more second index values, the first index value indicating an overall output level change in a plurality of fluorescence channels, the second index value indicating an output level change in each of the plurality of fluorescence channels.

20. A method for verifying a state of a biological sample analyzer, the method comprising:

a verification process for verifying a state of an analyzer by using at least one or more first index values and one or more second index values, the first index value and the second index value being generated from signal intensity data of light generated by light irradiation to particles flowing in a flow channel, wherein
the first index value indicates an overall output level change in a plurality of fluorescence channels, and the second index value indicates an output level change in each of the plurality of fluorescence channels.

FIG.1

Level Ratio

High Level

LogHeight

Standard

Spectrum Ratio

Deteriorated

Wavelength

ChA

FIG.2

LogHeight

Ch1          ChA          Ch2          Ch3          Wavelength

FIG.3

S

P          C

6100

6101

LIGHT
IRRADIATION
UNIT

6102

DETECTION UNIT

6103

INFORMATION
PROCESSING
UNIT

SORTING UNIT

6104

FIG.4

START S100

READ STANDARD VALUE S101

CARRY OUT OPTICAL ADJUSTMENT S102

QC HAS BEEN PASSED ONCE OR MORE? S103

SET LIGHT RECEIVING ELEMENT GAIN RECORDED AT PREVIOUS PASSING OF QC S104

MAKE BEADS FLOW TO ACQUIRE DATA S105

ACQUIRE SINGLET DATA RELATED TO SPECIFIC PARTICLES S106

CALCULATE DETERMINATION VALUES BY DETERMINATION EQUATIONS A AND B S107

SPECIFICATIONS A AND B MET? S108

S113
Fail
END

MAKE BEADS FLOW TO ACQUIRE DATA S109

ACQUIRE SINGLET DATA RELATED TO SPECIFIC PARTICLES AND ADJUST GAIN S110

RECORD ADJUSTMENT RESULT S111

END S112

# FIG.5

# FIG.6

# FIG.7

| | |
|---|---|
| LIQUID SUPPLY STEP | ∽ S101 |
| ↓ | |
| DETERMINATION STEP | ∽ S102 |
| ↓ | |
| COLLECTION STEP | ∽ S103 |

# FIG.8

# FIG.9

## INTERNATIONAL SEARCH REPORT

| International application No. |
| :-- |
| **PCT/JP2023/045864** |

| | |
| :-- | :-- |
| **A.** | **CLASSIFICATION OF SUBJECT MATTER** |

*G01N 15/14*(2024.01)i; *G01N 21/64*(2006.01)i
FI:   G01N15/14 Z; G01N21/64 Z

According to International Patent Classification (IPC) or to both national classification and IPC

| | |
| :-- | :-- |
| **B.** | **FIELDS SEARCHED** |

Minimum documentation searched (classification system followed by classification symbols)

G01N15/14; G01N21/64

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| :-- | :-- |
| **C.** | **DOCUMENTS CONSIDERED TO BE RELEVANT** |

| Category* | Citation of document, with indication, where appropriate, of the relevant passages | Relevant to claim No. |
| :-: | :-- | :-: |
| X | JP 2017-026556 A (SONY CORPORATION) 02 February 2017 (2017-02-02) paragraphs [0028]-[0076], fig. 2-8, etc. | 1-4, 11-20 |
| A | paragraphs [0028]-[0076], fig. 2-8, etc. | 5-10 |
| A | WO 2022/239457 A1 (SONY GROUP CORPORATION) 17 November 2022 (2022-11-17) paragraphs [0040]-[0068], fig. 2-6, etc. | 1-20 |
| A | JP 2001-296232 A (NIKKISO CO., LTD.) 26 October 2001 (2001-10-26) entire text, all drawings | 1-20 |

☐ Further documents are listed in the continuation of Box C.    ☑ See patent family annex.

| | | | |
| :-- | :-- | :-- | :-- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| :-- | :-- |
| **27 February 2024** | **12 March 2024** |

| Name and mailing address of the ISA/JP | Authorized officer |
| :-- | :-- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2023/045864**

| Patent document cited in search report | | | Publication date (day/month/year) | Patent family member(s) | | | Publication date (day/month/year) |
|---|---|---|---|---|---|---|---|
| JP | 2017-026556 | A | 02 February 2017 | WO 2017/018057 A1 paragraphs [0028]-[0076], fig. 2-8, etc. | | | |
| WO | 2022/239457 | A1 | 17 November 2022 | CN 117242335 A | | | |
| JP | 2001-296232 | A | 26 October 2001 | (Family: none) | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017026556 A
- JP 2011232259 A
- JP 2020076736 A